(19)

Europäisches
Patentamt
European
Patent Office
Office européen
des brevets

(11)     **EP 2 237 595 B1**

(12)     **EUROPEAN PATENT SPECIFICATION**

(45) Date of publication and mention
of the grant of the patent:
**15.08.2012 Bulletin 2012/33**

(51) Int Cl.:
*H04W 24/08* (2009.01)     *H04L 1/20* (2006.01)

(21) Application number: **09709897.4**

(86) International application number:
**PCT/CN2009/070293**

(22) Date of filing: **23.01.2009**

(87) International publication number:
**WO 2009/100667 (20.08.2009 Gazette 2009/34)**

(54) **CHANNEL QUALITY MEASURING METHOD, TERMINAL AND SYSTEM**

KANALQUALITÄTSMESSVERFAHREN, ENDGERÄT UND SYSTEM

PROCÉDÉ, TERMINAL ET SYSTÈME DE MESURE DE LA QUALITÉ DU CANAL

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **05.02.2008 CN 200810006246
24.07.2008 CN 200810135017**

(43) Date of publication of application:
**06.10.2010 Bulletin 2010/40**

(73) Proprietor: **Huawei Technologies Co., Ltd.
Longgang District, Shenzhen
Guangdong 518129 (CN)**

(72) Inventors:
 • **FANG, Ming
 Longgang District
 Shenzhen 518129 (CN)**
 • **YIN, Likun
 Longgang District
 Shenzhen 518129 (CN)**

(74) Representative: **Kreuz, Georg Maria et al
Huawei Technologies Duesseldorf GmbH
Dessauerstrasse 3
80992 München (DE)**

(56) References cited:
**EP-A1- 1 835 670     WO-A1-2009/102109
WO-A2-95/31879     WO-A2-2009/064882
CN-A- 101 032 182     CN-A- 101 047 426
CN-A- 101 047 627**

• **"3rd Generation Partnership Project; Technical
Specification Group GSM/EDGE Radio Access
Network; Radio subsystem link control (Release
7)", 3GPP STANDARD; 3GPP TS 45.008, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. V7.11.0, 1 February 2008
(2008-02-01), pages 1-117, XP050379204, & "3rd
Generation Partnership Project; Technical
Specification Group GSM/EDGE Radio Access
Network; Multiplexing and multiple access on the
radio path (Release 7)", 3GPP STANDARD; 3GPP
TS 45.002, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, no.
V7.6.0, 1 November 2007 (2007-11-01), pages
1-105, XP050378984,**
• **HUAWEI TECHNOLOGIES CO LTD ET AL:
"Channel quality measurement and reporting",
3GPP DRAFT; GP-081420, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. TSG GERAN, no.
Florence; 20080825, 28 August 2008 (2008-08-28),
XP050413839, [retrieved on 2008-08-28]**
• **HUAWEI TECHNOLOGIES CO LTD: "Channel
Quality Measurement in RTTI configuration",
3GPP DRAFT; GP-081342, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. TSG GERAN, no.
Florence; 20080825, 28 August 2008 (2008-08-28),
XP050413797, [retrieved on 2008-08-28]**

EP 2 237 595 B1

- HUAWEI TECHNOLOGIES CO LTD: "Channel Quality Measurement in RTTI configuration", 3GPP DRAFT; GP-081016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 20 August 2008 (2008-08-20), XP050413498, [retrieved on 2008-08-20]
- HUAWEI TECHNOLOGIES CO LTD: "Channel quality measurement in RTTI configuration", 3GPP DRAFT; GP-081014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 20 August 2008 (2008-08-20), XP050413496, [retrieved on 2008-08-20]
- LG ELECTRONICS INC: "Channel quality reporting in RTTI configuration with the time unit of 20", 3GPP DRAFT; GP-080498 DISCUSSION PAPER ON THE CHANNEL QUALITY REPORTING IN RTTI CONFIGURATION WITH THE TIME UNIT OF 20 MS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX, vol. TSG GERAN, no. Malaga; 20080506, 6 May 2008 (2008-05-06), XP050019820, [retrieved on 2008-05-06]
- HUAWEI TECHNOLOGIES CO LTD: "Channel quality measurement in RTTI configuration", 3GPP DRAFT; GP-080042, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seoul; 20080206, 6 February 2008 (2008-02-06), XP050019396, [retrieved on 2008-02-06]
- HUAWEI TECHNOLOGIES CO LTD: "Channel Quality Measurement in RTTI configuration", 3GPP DRAFT; GP-080044, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seoul; 20080211, 11 February 2008 (2008-02-11), XP050019398, [retrieved on 2008-02-11]

**Description**

**FIELD OF THE TECHNOLOGY**

The present invention relates to the field of communications, and more particularly to a method and system for channel quality measurement.

**BACKGROUND OF THE INVENTION**

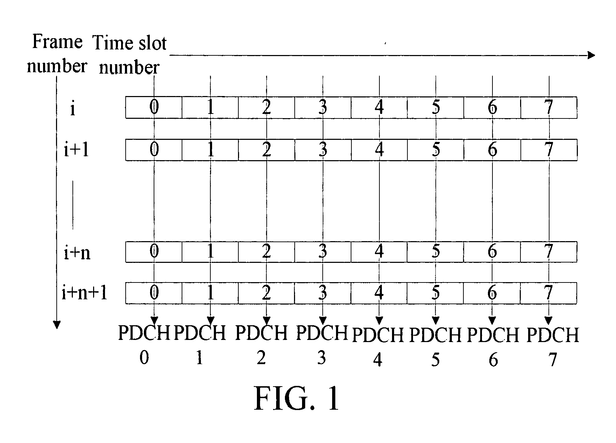

In systems, such as Global System for Mobile communications (GSM), General Packet Radio Service (GPRS), and Enhanced Data rates for GSM Evolution (EDGE), one Time Division Multiple Access (TDMA) frame is divided into 8 time slots, as shown in FIG. 1, and the same time slots of each of the frames form one Packet Data Channel (PDCH). The time slot assigned to the GPRS/Enhanced GPRS (EGPRS) is called the PDCH, and the network uses the PDCH as a unit when assigning channel resources.

EGPRS, being an enhanced version of a GPRS air interface, is also called the EDGE, which is a mobile network radio technology enabling an existing GSM network to have a capability of providing 3G services by using an existing frequency band, and improves a data rate of the system and implements a higher bit rate by adopting an 8-PSK modulation technology.

In the EGPRS system, under a packet transmission mode, the network notifies a terminal of whether channel quality measurement is performed and a measurement mode through a sent assignment message or reconfiguration message. After receiving the assignment message, the terminal performs the channel quality measurement according to the mode designated by the network, computes a Bit Error Probability (BEP) and an interference measurement value according to a measurement result, and then reports the BEP and the interference measurement value to the network through an EGPRS packet downlink Acknowledgement/Negative acknowledgement (Ack/Nack) message. The EGPRS packet downlink Ack/Nack message includes a channel quality report field, and the field includes the information, such as the BEP and the interference measurement value, computed by the terminal. The network correspondingly adjusts a code of a sent data block through the channel quality reported by the terminal, so as to optimize the transmission performance.

The assignment message or the reconfiguration message sent by the network includes a field indicating a link quality measurement mode, and the network may indicate the terminal to report the link measurement mode through the field, which includes the following cases:

(1) The terminal does not report a single time slot interference measurement $\gamma$ value, and does not report a single time slot BEP measurement BEP value.

(2) The terminal only reports the single time slot interference measurement $\gamma$ value.

(3) The terminal only reports the single time slot BEP measurement BEP value.

(4) The terminal reports the single time slot interference measurement $\gamma$ value, and reports the single time slot BEP measurement BEP value.

The EGPRS packet downlink Ack/Nack message includes a time slot link quality measurement field, and the terminal reports the single time slot interference measurement $\gamma$ value and/or the single time slot BEP measurement BEP value on the assigned time slot through the field. The interference measurement $\gamma$ value may be converted into an interference level I_LEVEL value through a certain corresponding relation, such that when the network requires the terminal to report the $\gamma$ value, the terminal reports the corresponding I_LEVEL value.

For example, the network requires the terminal to report the single time slot interference measurement $\gamma$ value and report the single time slot BEP measurement BEP value. If the time slot assigned to the terminal is a time slot 0 (TN0), the terminal reports a Mean Bit Error Probability (MEAN_BEP) value and the I_LEVEL value under a certain modulation mode on TN0. If a plurality of time slots is assigned to the terminal, the terminal reports the MEAN_BEP value and the I_LEVEL value under a certain modulation mode on each assigned time slot.

For example, the measurement value on TN0 is reported in the following manner:

{0|1 { 0 <GMSK_MEAN_BEP _TN0 : bit (4) > a MEAN_BEP value under a GMSK modulation mode on TN0

|1 < 8PSK_MEAN_BEP _TN0 : bit (4) >}}or a MEAN_BEP value under an 8PSK modulation mode on TN0
and

{0|1< I_LEVEL_TN0 : bit (4) > } the I_LEVEL value on TNO

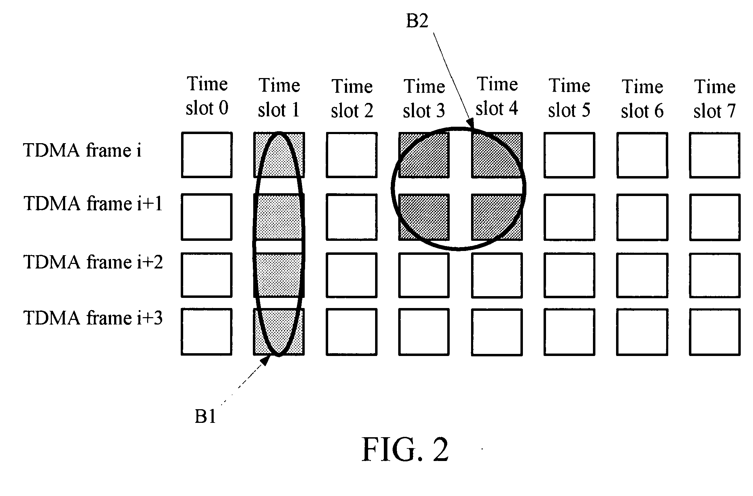

During the evolution of GSM/EDGE Radio Access Network (GERAN), a transmission time delay is reduced by adopting a fast Ack/Nack message based on time, that is to say, the Ack/Nack information is quickly fed back by carrying a short bitmap in a downlink Radio Link Control/Medium Access Control (RLC/MAC) data block. After being packaged in the RLC/MAC data block, the high-level data is borne and transmitted by a radio block. The radio block is a basic unit of radio resource assignment and radio transmission. Each Basic Transmission Time Interval (BTTI) radio block is formed by 4 bursts, and is respectively located on the same time slot of 4 continuous TDMA frames. The BTTI radio block is as shown by B1 in FIG. 2, the BTTI radio block B1 is on 4 continuous TDMA frames, each frame occupies one time slot, and a Transmission Time Interval (TTI) of B1 is equal to 20 ms. In order to reduce the transmission time delay of the high-level data, a Reduced TTI (RTTI) technology is proposed. An overall concept of the RTTI is to remain a size of each radio block unchanged, and to reduce the TTI by using a plurality of time slots. The RTTI radio block is as shown by B2 in FIG. 2, the RTTI radio block B2 is on 2 continuous TDMA frames, each frame occupies 2 time slots, and a TTI of B2 is equal to 10 ms.

However, it has become apparent that in the prior art, the terminal performs the channel quality measurement, relevant computation, and reporting on the basis of one time slot and the BTTI radio block, and performs filtering at intervals of 20 ms. The solution cannot support the channel quality measurement, relevant computation, and reporting under the RTTI radio block configuration.

Document "3GPP TS 45.008 V7.11.00 (2008-02)" discloses in section 10.2.3.2.1 that the mobile station shall measure the received signal quality during EGPRS downlink TBF transfer. The quality parameters shall be, for the radio blocks intended for the mobile station only, individually averaged per channel (timeslot) and per modulation type as follows:

$$R_n = (1-e) \cdot R_{n-1} + e \cdot x_n, \quad R_{-1} = 0$$

$$MEAN\_BEP\_TN_n = (1 - e \cdot \frac{x_n}{R_n}) \cdot MEAN\_BEP\_TN_{n-1} + e \cdot \frac{x_n}{R_n} \cdot MEAN\_BEP_{block,n}$$

$$CV\_BEP\_TN_n = (1 - e \cdot \frac{x_n}{R_n}) \cdot CV\_BEP\_TN_{n-1} + e \cdot \frac{x_n}{R_n} \cdot CV\_BEP_{block,n},$$

wherein n is the iteration index, incremented per each downlink radio block, $R_n$ denotes the reliability of the filtered quality parameters for the respective modulation type, and e is the forgetting factor. Further, $X_n$ denotes the existence of quality parameters for the $n^{th}$ block for the respective modulation type, i.e. if the radio block is intended for this mobile station. The values 1 and 0 of $X_n$ denote the existence and absence of quality parameters, respectively.

Document WO 95/61879 A2 refers to control of handover and transmission power control of mobile station in a mobile telecommunications system. Herein, data is transmitted over a radio path between a mobile station and a base station as bursts in time slots of successive frames. A mobile station can be allocated at least two time slots in each frame for high-speed data transmission. The mobile station is arranged to measure the characteristics of the received signal, such as signal level and/or quality, in each time slot allocated to the mobile station. The fixed radio network is arranged to control the transmitting power of the mobile station on the basis of a combination of measurement results of two or more time slots, or on the basis of a measurement result of the poorest time slot.

## SUMMARY OF THE INVENTION

Aspects of the present invention are directed to a channel quality measuring method, terminal, and system, such that the terminal may support channel quality measurement under a BTTI configuration and an RTTI configuration at the same time.

According to a first aspect, the present invention provides a channel quality measuring method for an EGPRS system, which includes the following steps.

Bursts forming an RTTI radio block are received.

Channel quality measurement parameters of the RTTI radio block are computed according to channel quality measurement parameters of the bursts, and channel quality measurement parameters of a time slot pair corresponding to the RTTI radio block are computed according to the channel quality measurement parameters of the RTTI radio block.

The channel quality measurement parameters comprise a Mean Bit Error Probability (MEAN_BEP) and/or a BEP variance.

During the computing the channel quality measurement parameters of the time slot pair corresponding to the RTTI radio block according to the channel quality measurement parameters of the RTTI radio block, a reliability parameter $R_n$ of quality parameters of a designated modulation type after being filtered is set according to a formula in the following:

$$R_n = (1-e) \cdot R_{n-1} + e \cdot \frac{(x_{n,a} + x_{n,b})}{2}, \quad R_{-1} = 0 ,$$

where n is an iteration index, e is a forgetting factor intended for 20 ms filtering and being the same as that for a basic transmission time interval (BTTi) radio block configuration $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist;

the MEAN_BEP of the time slot pair is computed according to any one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n}$$

or

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a} MEAN\_BEP_{block,n,a} + x_{n,a} MEAN\_BEP_{block,n,b}}{2R_n} ,$$

where n is an iteration index, MEAN_BEP_TN$_n$ or MEAN_BEP_PAIR$_n$ is an $n^{th}$ acquired value of the MEAN_BEP of the time slot pair, MEAN_BEP$_{block\ n,a}$ is a MEAN_BEP of the RTTI radio block of first 10 ms of the $n^{th}$ 20 ms, and MEAN_ BEP$_{block,n,b}$ is a MEAN_BEP of the RTTI radio block of last 10 ms of the $n^{th}$ 20 ms; and

the BEP variance of the time slot pair is computed according to any one of formulae in the following:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a} CV\_BEP_{block,n,a} + x_{n,b} CV\_BEP_{block,n,b}}{2R_n}$$

or

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a} CV\_BEP_{block,n,a} + x_{n,b} CV\_BEP_{block,n,b}}{2R_n} ,$$

where n is an iteration index, CV_BEP_TN$_n$ or CV_BEP_PAIR$_n$ is an $n^{th}$ acquired value of the BEP variance of the time slot pair, $CV\_BEP_{block,n,a}$ is a BEP variance of the RTTI radio block of first 10 ms of the $n^{th}$ 20 ms, and $CV\_BEP_{block,n,b}$ is a BEP variance of the RTTI radio block of last 10 ms of the $n^{th}$ 20 ms.

RTTI channel quality measurement parameters are reported through a single time slot measurement value report field corresponding to any time slot in a time slot pair of an RTTI radio block.

Alternatively, RTTI channel quality measurement parameters are reported through an added time slot pair measurement value report field.

According to a second aspect, the present invention provides a terminal for an EGPRS system, which includes a burst receiving unit, a first computing unit, and a second computing unit.

The burst receiving unit is configured to receive bursts forming an RTTI radio block.

The first computing unit is configured to compute channel quality measurement parameters of the RTTI radio block according to channel quality measurement parameters of the bursts.

The second computing unit is configured to compute channel quality measurement parameters of a time slot pair corresponding to the RTTI radio block according to the channel quality measurement parameters of the RTTI radio block.

The second computing unit comprises:

a parameter setting module, configured to, set a reliability parameter $R_n$ of quality parameters of a designated modulation type after being filtered according to a formula in the following:

$$R_n = (1-e) \cdot R_{n-1} + e \cdot \frac{(x_{n,a} + x_{n,b})}{2}, \quad R_{-1} = 0 \quad ,$$

where n is an iteration index, e is a forgetting factor intended for 20 ms filtering and being the same as that for a basic transmission time interval (BTTi) radio block configuration, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist;

a time slot pair Mean Bit Error Probability (MEAN_BEP) computing module, configured to compute a MEAN_BEP of the time slot pair according to any one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n}$$

or

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a} MEAN\_BEP_{block,n,a} + x_{n,a} MEAN\_BEP_{block,n,b}}{2R_n} \quad ,$$

where n is an iteration index, $MEAN\_BEP\_TN_n$ or $MEAN\_BEP\_PAIR_n$ is an $n^{th}$ acquired value of the MEAN_BEP of the time slot pair, $MEAN\_BEP_{block,n,a}$ is a MEAN_BEP of the RTTI radio block of first 10 ms of the $n^{th}$ 20 ms, and $MEAN\_BEP_{block,n,b}$ is a MEAN_BEP of the RTTI radio block of last 10 ms of the $n^{th}$ 20 ms; and a time slot pair BEP variance computing module, configured to compute a BEP variance of the time slot pair according to any one of formulae in the following:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a} CV\_BEP_{block,n,a} + x_{n,b} CV\_BEP_{block,n,b}}{2R_n}$$

or

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a} CV\_BEP_{block,n,a} + x_{n,b} CV\_BEP_{block,n,b}}{2R_n}$$,

where n is an iteration index, $CV\_BEP\_TN_n$ or $CV\_BEP\_PAIR_n$ is an $n^{th}$ acquired value of the BEP variance of the time slot pair, $CV\_BEP_{block,n,a}$ is a BEP variance of the RTTI radio block of first 10 ms of the $n^{th}$ 20 ms, and $CV\_BEP_{block,n,b}$ is a BEP variance of the RTTI radio block of last 10 ms of the $n^{th}$ 20 ms.

Preferably, the present invention provides a channel quality measuring system, which includes a network side and a terminal according to the second aspect.

The network side is configured to deliver a measurement mode indication, where the measurement mode indication is configured to indicate channel quality measurement parameters of a time slot pair reported under an RTTI configuration.

The terminal is configured to perform measurement under the RTTI configuration according to the measurement mode indication.

It may be known from the technical solutions of the present invention that, in the present invention, by receiving the bursts forming the RTTI radio block, time slot pair measurement values of the RTTI are computed on the basis of the RTTI radio block of two time slots; and overall quality measurement parameters on all assigned channels are computed according to the time slot pair measurement values, such that the terminal may support channel quality measurement and reporting under the BTTI configuration and the RTTI configuration at the same time, thereby implementing the channel quality measurement and reporting under the different configurations

## BRIEF DESCRIPTION OF THE DRAWINGS

FIG. 1 is a schematic structural view of TDMA frames in the prior art;

FIG. 2 is a schematic view of radio blocks in the TDMA frames in the prior art;

FIG. 3 is a flow chart of a channel quality measuring method according to an embodiment of the present invention; and

FIG. 4 is a schematic structural view of a terminal according to an embodiment of the present invention.

## DETAILED DESCRIPTION OF THE EMBODIMENTS

To help those skilled in the art better understand the technical solution, the present invention is further described in detail with reference to accompanying drawings and embodiments.

In the present invention, in terms of features of an RTTI radio block being different from a BTTI radio block, that is, four bursts of the RTTI radio block are distributed on two time slots (hereinafter referred to as a time slot pair), the RTTI radio block is measured on the basis of one time slot pair, and the channel quality is computed according to a measurement result, thereby implementing channel quality measurement under an RTTI configuration.

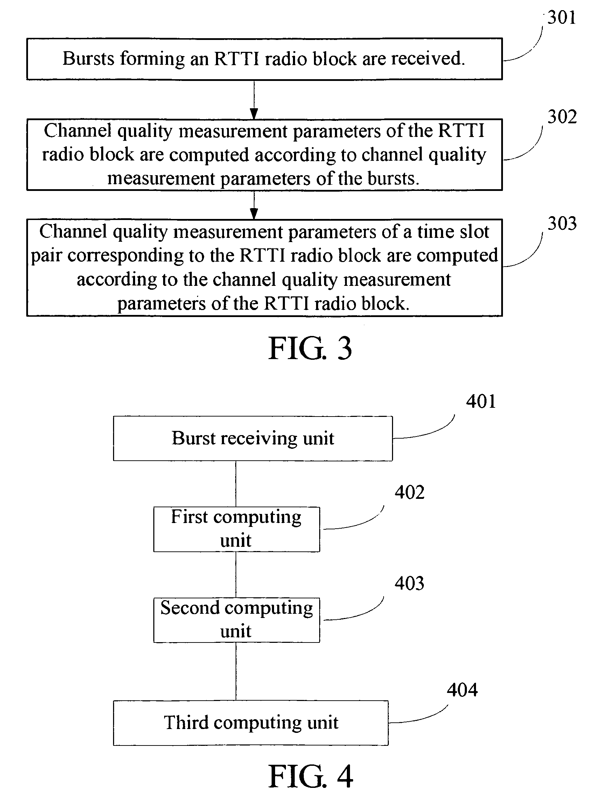

FIG. 3 is a flow chart of a channel quality measuring method according to an embodiment of the present invention, which mainly includes the following steps.

In Step 301, bursts forming an RTTI radio block are received.

In Step 302, channel quality measurement parameters of the RTTI radio block are computed according to channel quality measurement parameters of the bursts.

In Step 303, channel quality measurement parameters of a time slot pair corresponding to the RTTI radio block are computed according to the channel quality measurement parameters of the RTTI radio block.

In order to implement the channel quality measurement under various configurations (BTTI configuration and RTTI configuration), a network side indicates a channel quality measurement mode to a terminal, and the terminal performs the corresponding measurement according to the mode indicated by the network side.

When the channel quality measurement under the RTTI configuration is performed, the four bursts forming the RTTI radio block are received, the measurement is performed on the basis of the RTTI radio block of the two time slots, time slot pair measurement values of the RTTI are computed, and the channel quality measurement parameters are computed according to the time slot pair measurement values. Specifically, a plurality of manners may be adopted.

1. A forgetting factor being the same as that of the BTTI configuration in the prior art, that is, a forgetting factor intended for 20 ms filtering, is adopted.

2. A forgetting factor intended for 10 ms filtering, that is, a forgetting factor being different from that of the BTTI configuration, is adopted, and the forgetting factor under the RTTI configuration may be a function of the forgetting factor under the BTTI configuration, for example, a linear function multiplied by a coefficient, such as, 0.5 or 0.3; or a non-linear function, such as, a value of e is a function $e = 1 - \sqrt{1 - e'}$ of the forgetting factor (e') under the BTTI configuration in the prior art.

In the following, the two methods are described in detail, but only the first method corresponds to the claimed invention.

In an embodiment, a measurement of 20 ms filtering on the basis of one time slot pair is performed.

In this embodiment, a forgetting factor adopted during channel quality measurement is applicable to 20 ms filtering. Each RTTI radio block channel quality measurement value (referred to as radio block measurement value for short) intended for the terminal and being in a designated modulation type is computed, the RTTI radio block measurement values may include a MEAN_BEP of the RTTI radio block and a BEP variance of the RTTI radio block, and the RTTI radio block measurement values are computed according to measurement values of the four bursts forming the radio block and distributed on the two time slots. RTTI time slot pair channel quality measurement values are computed according to the RTTI radio block measurement values, and the RTTI time slot pair channel quality measurement values may include a MEAN_BEP of the time slot pair and a BEP variance of the time slot pair. Then, overall channel quality measurement parameters on all the assigned channels, for example, an overall channel MEAN_BEP and an overall channel BEP variance on all the assigned channels, are computed according to the time slot pair measurement values.

Firstly, the MEAN_BEP of the RTTI radio block, and the BEP variance of the RTTI radio block are computed.

The terminal receives the RTTI radio block on the two time slots (that is, one time slot pair) forming an RTTI PDCH pair, and determines whether the RTTI radio block is intended for the terminal and is in the designated modulation mode. If yes, a mean value of computation values of the four bursts forming the RTTI radio block serves as a computation value of the RTTI radio block. A formula is shown in the following.

The MEAN_BEP of the RTTI radio block is:

$$MEAN\_BEP_{block} = \frac{1}{4}\sum_{i=1}^{4} BEP_{burst\ i} \qquad \text{(Formula 1)}$$

That is, the MEAN_BEP of the RTTI radio block $MEAN\_BEP_{block}$ is the mean value of BEPs $BEP_{burst\ i}$ of the four bursts forming the RTTI radio block.

The BEP variance of the RTTI radio block is:

$$CV\_BEP_{block} = \frac{\sqrt{\frac{1}{3}\sum_{k=1}^{4}\left(BEP_{burst\ k} - \frac{1}{4}\sum_{i=1}^{4}BEP_{burst\ i}\right)^2}}{\frac{1}{4}\sum_{i=1}^{4}BEP_{burst\ i}}$$

(Formula 2)

It should be noted that, in 20 ms, whether the RTTI radio blocks of the first 10 ms and the last 10 ms are intended for the terminal and are in the designated modulation mode may have the following cases:

(1) Only the RTTI radio block of the first 10 ms is intended for the terminal and is in the designated modulation mode.

(2) Only the RTTI radio block of the last 10 ms is intended for the terminal and is in the designated modulation mode.

(3) Both of the RTTI radio blocks of the first 10 ms and the last 10 ms are intended for the terminal and are in the designated modulation mode.

(4) Neither of the RTTI radio blocks of the first 10 ms and the last 10 ms is intended for the terminal nor is in the designated modulation mode.

However, no matter for which case, both Formula (1) and Formula (2) are satisfied. For ease of description, a represents the RTTI radio block of the first 10 ms, and b represents the RTTI radio block of the last 10 ms, so no matter whether the RTTI radio block of a and/or b is intended for the terminal and is in the designated modulation mode, Formula (1) and Formula (2) are satisfied, and derivatives of Formula (1) and Formula (2) are acquired as follows:

$$MEAN\_BEP_{blcok,a} = \frac{1}{4}\sum_{i=1}^{4}BEP_{burst\ i}$$

(Formula 3)

$$CV\_BEP_{block,a} = \frac{\sqrt{\frac{1}{3}\sum_{k=1}^{4}\left(BEP_{burst\ k} - \frac{1}{4}\sum_{i=1}^{4}BEP_{burst\ i}\right)^2}}{\frac{1}{4}\sum_{i=1}^{4}BEP_{burst\ i}}$$

(Formula 4)

$$MEAN\_BEP_{blcok,b} = \frac{1}{4}\sum_{i=1}^{4}BEP_{burst\ i}$$

(Formula 5)

$$CV\_BEP_{block,b} = \frac{\sqrt{\frac{1}{3}\sum_{k=1}^{4}\left(BEP_{burst\ k} - \frac{1}{4}\sum_{i=1}^{4}BEP_{burst\ i}\right)^2}}{\frac{1}{4}\sum_{i=1}^{4}BEP_{burst\ i}}$$

(Formula 6)

Next, the measurement value of the time slot pair is computed on the basis of one time slot pair, and specifically the following two manners can be adopted.

In Manner 1, symbols of the single time slot measurement value in the prior art are used, but the definitions thereof are different, and in the present invention, the symbols of the single time slot measurement value are employed to compute the measurement values of one time slot pair, where Formulae (7), (8), and (9) are adopted.

$$R_n = (1-e) \cdot R_{n-1} + e \cdot \frac{(x_{n,a} + x_{n,b})}{2}, \quad R_{-1} = 0 \qquad \text{(Formula 7)}$$

In Formula 7, n is an iteration index, and $R_n$ represents a reliability parameter of the quality parameters of the designated modulation type after an $n^{th}$ filtering.

e is a forgetting factor, having a definition the same as that of the forgetting factor in the channel quality measurement under the BTTI modulation mode in the prior art, and representing an effect of a former value (that is, the previously computed value) on the current value (the $n^{th}$ value), where e=1 indicates that the effect of the former value on the current value is the minimum, and e=0 indicates that the effect of the former value on the current value is the maximum, that is, the smaller the value of e is, the longer the effect of the former value will last; on the contrary, the greater the value of e is, the shorter the effect of the former value will last. The definition of the forgetting factor e is given in the following.

When the terminal receives BEP_PERIOD2 and a field value thereof is any other value than 15, the forgetting factor e is defined as $e_2$, which may refer to BEP_PERIOD2 in Table 1 in the following. In this case, each terminal is allowed to be individually and separately filtered.

When the terminal receives the BEP_PERIOD2 and the field value thereof is 15 (Norm), the forgetting factor e is defined as $e_i$, which may refer to BEP_PERIOD in Table 1 in the following. Here, a normal filtering is performed (non-individual). The BEP_PERIOD2 is used by a related terminal in a service area until the terminal receives a new BEP_PERIOD2 value in the same cell, or the terminal leaves the cell, or the terminal enters a packet idle mode or an MAC idle state. The BEP_PERIOD2 is sent to the single terminal on a downlink or an uplink PACCH, and the BEP_PERIOD is sent through broadcasting on a PBCCH or a BCCH (if the PBCCH does not exist).

Table 1

| Field value | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|
| BEP_PERJOD | Reserved | | | | | 25 | 20 | 15 | 12 | 10 | 7 | 5 | 4 | 3 | 2 | 1 |
| $e_1$ | - | | | | | 0.08 | 0.1 | 0.15 | 0.2 | 0.25 | 0.3 | 0.4 | 0.5 | 0.65 | 0.8 | 1 |
| BEP_PERIOD2 | Norm | 90 | 70 | 55 | 40 | 25 | 20 | 15 | 12 | 10 | 7 | 5 | 4 | 3 | 2 | 1 |
| $e_2$ | $e_1$ | 0.03 | 0.04 | 0.05 | 0.065 | 0.08 | 0.1 | 0.15 | 0.2 | 0.25 | 0.3 | 0.4 | 0.5 | 0.65 | 0.8 | 1 |

In Table 1, $X_{n,a}$ is a parameter representing whether quality parameters of a block of first 10 ms of an $n^{th}$ filtering designated to be modulated, that is, an $n^{th}$ 20 ms, exist, where, when a value of $X_{n,a}$ is 1, it indicates that the RTTI radio block of the first 10 ms of the filtering, that is, the $n^{th}$ 20 ms, is in the designated modulation mode and is intended for the terminal; otherwise, the value of $X_{n,a}$ is 0. $X_{n,b}$ is a parameter representing whether quality parameters designated to be modulated exist, where the quality parameters are of last 10 ms of the $n^{th}$ filtering, that is, the $n^{th}$ 20 ms; when a value of $X_{n,b}$ is 1, it indicates that the RTTI radio block of the last 10 ms of the filtering, that is, the $n^{th}$ 20 ms, is in the designated modulation mode and is intended for the terminal; otherwise, the value of $X_{n,b}$ is 0.

Formula 7 may be deducted in the following manner:

$$R_{n,a} = (1-e) \cdot R_{n-1} + e \cdot x_{n,a}, \quad R_{n,b} = (1-e) \cdot R_{n-1} + e \cdot x_{n,b},$$

In the above formula, $R_{n,a}$ is a reliability parameter of quality parameters after being filtered, where the quality parameters are of the first 10 ms of the $n^{th}$ filtering and designated to be modulated, that is, the $n^{th}$ 20 ms, and $R_{n,b}$ is a reliability parameter of quality parameters of the last 10 ms of the $n^{th}$ filtering designated to be modulated, that is, the $n^{th}$ 20 ms, after being filtered. $R_n = \dfrac{R_{n,a} + R_{n,b}}{2}$ is introduced, and Formula 7 is acquired.

Thus, in the 20 ms, whether the RTTI radio blocks of the first 10 ms and the last 10 ms are intended for the terminal and are in the designated modulation mode may have the following four cases:

1) Only the RTTI radio block of the first 10 ms satisfies the conditions, $X_{n,a} = 1$ and $X_{n,b}=0$.

2) Only the RTTI radio block of the last 10 ms satisfies the conditions, $X_{n,a}=0$ and $X_{n,b}=1$.

3) Both of the RTTI radio blocks of the first 10 ms and the last 10 ms satisfy the conditions, $X_{n,a}=1$ and $X_{n,b}=1$.

4) Neither of the RTTI radio blocks of the first 10 ms and the last 10 ms satisfies the conditions, $X_{n,a} =0$ and $X_{n,b} =0$.

$$MEAN\_BEP\_TN_n = (1 - e \cdot \frac{x_{n,a} + x_{n,b}}{2R_n}) \cdot MEAN\_BEP\_TN_{n-1}$$
$$+ e \cdot \frac{x_{n,a} MEAN\_BEP_{block,n,a} + x_{n,a} MEAN\_BEP_{block,n,b}}{2R_n} \qquad \text{(Formula 8)}$$

In Formula 8, MEAN_BEP_TNn is an $n^{th}$ acquired value of the MEAN_BEP of the RTTI time slot pair, that is, the acquired value of the $n^{th}$ filtering, that is, the $n^{th}$ 20 ms, and $MEAN\_BEP\_TN_{n-1}$ is an $(n-1)^{th}$ acquired value; $MEAN\_BEP_{block,n,a}$ is the MEAN_BEP of the RTTI radio block of the first 10 ms of the $n^{th}$ 20 ms, and $MEAN\_BEP_{block,n,b}$ is the MEAN_BEP of the RTTI radio block of the last 10 ms of the $n^{th}$ 20 ms.

$$CV\_BEP\_TN_n = (1 - e \cdot \frac{x_{n,a} + x_{n,b}}{2R_n}) \cdot CV\_BEP\_TN_{n-1} +$$
$$e \cdot \frac{x_{n,a} CV\_BEP_{block,n,a} + x_{n,b} CV\_BEP_{block,n,b}}{2R_n} \qquad \text{(Formula 9)}$$

In Formula 9, $CV\_BEP\_TN_n$ is an $n^{th}$ acquired value of the MEAN_BEP of the RTTI time slot pair, that is, the acquired value of the $n^{th}$ filtering, that is, the $n^{th}$ 20 ms, and $CV\_BEP\_TN_{n-1}$ is an $(n-1)^{th}$ acquired value; $CV\_BEP_{block,n,a}$ is the BEP variance of the RTTI radio block of the first 10 ms of the $n^{th}$ 20 ms, and $CV\_BEP_{block,n,b}$ is the BEP variance of the RTTI radio block of the last 10 ms of the $n^{th}$ 20 ms.

In Manner 2, measurement values of a time slot pair are newly defined, that is, a MEAN_BEP of the time slot pair and a BEP variance of the time slot pair are newly defined. Only the form of Manner 2 is different from that of Manner 1 in which the original symbols of the single time slot measurement value are used, but the represented meaning is consistent, in which Formulae (10), (11), and (12) are adopted.

$$R_n = (1-e) \cdot R_{n-1} + e \cdot \frac{(x_{n,a} + x_{n,b})}{2}, \quad R_{-1} = 0$$

(Formula 10)

In Formula 10, n is an iteration index, which is increased with the downlink radio block, and $R_n$ represents a reliability of the quality parameters of the designated modulation type after being filtered.

e is a forgetting factor, having a definition the same as that of the forgetting factor in the channel quality measurement under the BTTI modulation mode in the prior art, which is specifically described in detail in the foregoing.

$X_{n,a}$ is a parameter representing whether quality parameters of a block of first 10 ms of an $n^{th}$ filtering designated to be modulated, that is, an $n^{th}$ 20 ms, exist, in which when a value of $X_{n,a}$ is 1, it indicates that the RTTI radio block of the first 10 ms of the filtering, that is, the $n^{th}$ 20 ms, is in the designated modulation mode and is intended for the terminal; otherwise, the value of $X_{n,a}$ is 0. $X_{n,b}$ is a parameter representing whether quality parameters of a block of last 10 ms of the $n^{th}$ filtering designated to be modulated, that is, the $n^{th}$ 20 ms, exist, where, when a value of $X_{n,b}$ is 1, it indicates that the RTTI radio block of the last 10 ms of the filtering, that is, the $n^{th}$ 20 ms, is in the designated modulation mode and is intended for the terminal; otherwise, the value of $X_{n,b}$ is 0.

Thus, in the 20 ms, whether the RTTI radio blocks of the first 10 ms and the last 10 ms are intended for the terminal and are in the designated modulation mode may have the following four cases:

1) Only the RTTI radio block of the first 10 ms satisfies the conditions, $X_{n,a}$=1 and $X_{n,b}$=0.

2) Only the RTTI radio block of the last 10 ms satisfies the conditions, $\mathbf{X}_{n,a}$=0 and $X_{n,b}$=1.

3) Both of the RTTI radio blocks of the first 10 ms and the last 10 ms satisfy the conditions, $X_{n,a}$=1 and $X_{n,b}$=1.

4) Neither of the RTTI radio blocks of the first 10 ms and the last 10 ms satisfies the conditions, $X_{n,a}$=0 and $X_{n,b}$=0.

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a}MEAN\_BEP_{block,n,a} + x_{n,a}MEAN\_BEP_{block,n,b}}{2R_n}$$

(Formula 11)

In Formula 11, MEAN_BEP_PAIR$_n$ is an $n^{th}$ acquired value of the MEAN_BEP of the RTTI time slot pair, that is, the acquired value of the $n^{th}$ filtering, that is, the $n^{th}$ 20 ms, and MEAN_BEP_PAIR$_{n-1}$ is an $(n-1)^{th}$ acquired value; MEAN_BEP$_{block,n,a}$ is the MEAN_BEP of the RTTI radio block of the first 10 ms of the $n^{th}$ filtering, that is, the $n^{th}$ 20 ms, and MEAN_BEP$_{block,n,b}$ is the MEAN_BEP of the RTTI radio block of the last 10 ms of the $n^{th}$ filtering, that is, the $n^{th}$ 20 ms.

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a}CV\_BEP_{block,n,a} + x_{n,b}CV\_BEP_{block,n,b}}{2R_n}$$

(Formula 12)

In Formula 12, CV_BEP_PAIR$_n$ is an $n^{th}$ acquired value of the MEAN_BEP of the RTTI time slot pair, that is, the acquired value of the $n^{th}$ filtering, that is, the $n^{th}$ 20 ms, and CV_BEP_PAIR$_{n-1}$ is an $(n-1)^{th}$ acquired value; CV_BEP$_{block,n,a}$ is the BEP variance of the RTTI radio block of the first 10 ms of the $n^{th}$ filtering, that is, the $n^{th}$ 20 ms, and CV_BEP$_{block,n,b}$ is the BEP variance of the RTTI radio block of the last 10 ms of the $n^{th}$ filtering, that is, the $n^{th}$ 20 ms.

After the time slot pair measurement values are computed, the overall channel measurement parameters are computed according to the computed time slot pair measurement values, and the method is that the computation values of the time slot pair are averaged, no matter whether the RTTI radio block is received on the channel since a measurement report is sent from the terminal of the last time. The computation is performed on the basis of one time slot pair, in which the measurement values of the time slot pair are averaged. Two manners corresponding to the two manners of computing the time slot pair measurement values are illustrated as follows.

In Manner 1, the symbols of the single time slot measurement value in the prior art are still used, but the definitions thereof are different, and in the embodiment of the present invention, when in the BTTI channel, the symbols of the single time slot measurement value still represent the measurement values of the BTTI channel of one time slot; while when in the RTTI channel, the symbols of the single time slot measurement value represent the RTTI channel measurement values of one time slot pair. Specifically, formulae in the following are adopted.

$$MEAN\_BEP_n = \frac{\sum_j R_n^{(j)} \cdot MEAN\_BEP\_TN_n^{(j)}}{\sum_j R_n^{(j)}}$$

(Formula 13)

$$CV\_BEP_n = \frac{\sum_j R_n^{(j)} \cdot CV\_BEP\_TN_n^{(j)}}{\sum_j R_n^{(j)}}$$

(Formula 14)

In the above formulae, n is an iteration index, and j is a BTTI channel number or an RTTI channel number, in which when j is the BTTI channel number, $R_n^{(j)}$ is a reliability parameter of quality parameters of a designated modulation type of the BTTI time slot corresponding to j after being filtered, $MEAN\_BEP\_TN_n^{(j)}$ is an $n^{th}$ acquired value of the MEAN_BEP of the BTTI time slot corresponding to j, and $CV\_BEP\_TN_n$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, $MEAN\_BEP\_TN_n^{(j)}$ is an $n^{th}$ acquired value of the MEAN_BEP of the RTTI time slot pair corresponding to j, and $CV\_BEP\_TN_n^{(j)}$ is an $n^{th}$ acquired value of the BEP variance of the RTTI time slot pair corresponding to j.

$MEAN\_BEP_n$ is an $n^{th}$ acquired value of the overall MEAN_BEP, and $CV\_BEP_n$ is an $n^{th}$ acquired value of the overall BEP variance.

In Manner 2, measurement values of a time slot pair are newly defined, that is, a MEAN_BEP of the time slot pair and a BEP variance of the time slot pair are newly defined, in which formulae in the following are adopted.

$$MEAN\_BEP_n = \frac{\sum_j R_n^{(j)} \cdot MEAN\_BEP\_TN_n^{(j)} + \sum_i R_n^{(i)} \cdot MEAN\_BEP\_PAIR_n^{(i)}}{\sum_j R_n^{(j)} + \sum_i R_n^{(i)}}$$

(Formula 15)

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}}$$

(Formula 16)

In the above formulae, n is an iteration index, j is a BTTI channel number, and i is an RTTI channel number, $MEAN\_BEP_n$ is an $n^{th}$ acquired value of the overall MEAN_BEP, $MEAN\_BEP\_TN_n^{(j)}$ is an $n^{th}$ acquired value of the MEAN_BEP of the BTTI time slot corresponding to j, and $MEAN\_BEP\_PAIR_n^{(i)}$ is an $n^{th}$ acquired value of the MEAN_BEP of the RTTI time slot pair corresponding to i, $R_n$ is a reliability parameter of quality parameters of a designated modulation type after being filtered, $R_n^{(j)}$ is a reliability parameter of quality parameters of a designated modulation type of the BTTI time slot corresponding to j after being filtered, and $R_n^{(i)}$ is a reliability parameter of quality parameters of a designated modulation type of the RTTI time slot pair corresponding to i after being filtered, $CV\_BEP_n$ is an $n^{th}$ acquired value of the overall BEP variance, $CV\_BEP\_TN_n^{(j)}$ is an $n^{th}$ acquired value of the BEP variance of the BTTI time slot corresponding to j, and $CV\_BEP\_PAIR_n^{(i)}$ is an $n^{th}$ acquired value of the BEP variance of the RTTI time slot pair corresponding to i.

In an example, a measurement of 10 ms filtering on the basis of one time slot pair is performed.

In this example, the RTTI channel quality measurement adopts the 10 ms (that is, one RTTI radio block period) filtering, and a value of a forgetting factor is applicable to the 10 ms filtering. RTTI radio block channel quality measurement values (referred to as radio block measurement values) are computed, the RTTI radio block measurement values may include a MEAN_BEP of the RTTI radio block and a BEP variance of the RTTI radio block, and the RTTI radio block measurement values are computed according to measurement values of the four bursts forming the radio block and distributed on the two time slots. RTTI time slot pair channel quality measurement values are computed according to the RTTI radio block measurement values. Then, overall channel quality measurement parameters on all the assigned channels, for example, an overall channel MEAN_BEP and an overall channel BEP variance on all the assigned channels, are computed according to the time slot pair measurement values.

Firstly, the MEAN_BEP of the RTTI radio block, and the BEP variance of the RTTI radio block are computed.

The terminal receives one RTTI radio block on the two time slots (that is, one time slot pair) forming an RTTI PDCH pair in 10 ms, and determines whether the RTTI radio block is intended for the terminal and is in the designated modulation mode. If yes, a mean value of computation values of the four bursts forming the RTTI radio block serves as a computation value of the RTTI radio block. A formula is shown in the following.

The MEAN_BEP of the RTTI radio block is:

$$MEAN\_BEP_{block} = \frac{1}{4}\sum_{i=1}^{4} BEP_{burst\ i} \qquad \text{(Formula 17)}$$

That is, the MEAN_BEP of the RTTI radio block $MEAN\_BEP_{block}$ is the mean value of BEPs $BEP_{burst\ i}$ of the four bursts forming the RTTI radio block.

The BEP variance of the RTTI radio block is:

$$CV\_BEP_{block} = \frac{\sqrt{\frac{1}{3}\sum_{k=1}^{4}\left(BEP_{burst\ k} - \frac{1}{4}\sum_{i=1}^{4} BEP_{burst\ i}\right)^2}}{\frac{1}{4}\sum_{i=1}^{4} BEP_{burst\ i}} \qquad \text{(Formula 18)}$$

It should be noted that, the four bursts are distributed on the two time slots (that is, one time slot pair), and belong to one RTTI radio block.

Next, the time slot pair measurement values are computed on the basis of one time slot pair, in which Formulae (19), (20), and (21) are adopted.

$$R_n = (1-e)\cdot R_{n-1} + e\cdot x_n, \quad R_{-1} = 0 \qquad \text{(Formula 19)}$$

In Formula 19, n is an iteration index, and $R_n$ represents a reliability parameter of the quality parameters of the designated modulation type after an $n^{th}$ filtering.

e is a forgetting factor, and a value of e may be a function of the forgetting factor (e', which is defined in the first embodiment) under the BTTI configuration in the prior art, for example, a non-linear function, $e = 1 - \sqrt{1-e'}$ (the embodiment of the present invention is not limited to the non-linear function). Thus, when the terminal receives BEP_ PERIOD2 and a field value thereof is any other value than 15, the forgetting factor e is defined as $e_2$, which may refer

to BEP_PERIOD2 in Table 2 in the following. In this case, each terminal is allowed to be individually and separately filtered. When the terminal receives the BEP_PERIOD2 and the field value thereof is 15 (Norm), the forgetting factor e is defined as $e_1$, which may refer to BEP_PERIOD in Table 2 in the following. Here, a normal filtering is performed (non-individual). The BEP_PERIOD2 is used by a related terminal in a service area until the terminal receives a new BEP_PERIOD2 value in the same cell, or the terminal leaves the cell, or the terminal enters a packet idle mode or an MAC idle state.

Table 2

| Field value | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|
| BEP_PERIOD | Reserved | | | | | 25 | 20 | 15 | 12 | 10 | 7 | 5 | 4 | 3 | 2 | 1 |
| $e_1$ | - | | | | | 0.04 | 0.05 | 0.08 | 0.11 | 0.13 | 0.16 | 0.225 | 0.29 | 0.41 | 0.55 | 1 |
| BEP_PERIOD2 | Norm | 90 | 70 | 55 | 40 | 25 | 20 | 15 | 12 | 10 | 7 | 5 | 4 | 3 | 2 | 1 |
| $e_2$ | $e_1$ | 0.015 | 0.02 | 0.025 | 0.033 | 0.04 | 0.05 | 0.08 | 0.11 | 0.13 | 0.16 | 0.225 | 0.29 | 0.41 | 0.55 | 1 |

It should be noted that, for the expression of the non-linear function (including, but not limited to, $e = 1 - \sqrt{1 - e'}$ ) in Table 2, when mapping between the forgetting factors e, $e_1$, and $e_2$ is implemented, valid numeral digits or digits being accurate to the decimal point of specific numeral values of $e_1$ and $e_2$ in Table 2 are not limited to what is given in Table 2.

$X_n$ is a parameter representing whether quality parameters of a block of an $n^{th}$ filtering designated to be modulated exist, that is, whether the RTTI radio block is intended for the terminal and is in the designated modulation mode, in which when a value of $x_n$ is 1, it indicates that the parameters exist; while when the value of $x_n$ is 0, it indicates that the parameters do not exist.

$$\text{MEAN\_BEP\_TN}_n = (1 - e \cdot \frac{x_n}{R_n}) \cdot \text{MEAN\_BEP\_TN}_{n-1} +$$
$$e \cdot \frac{x_n}{R_n} \cdot \text{MEAN\_BEP}_{block.n}$$

(Formula 20)

In Formula 20, MEAN_BEP_TN$_n$ is an $n^{th}$ acquired value of the MEAN_BEP of the RTTI time slot pair, that is, the acquired value of the $n^{th}$ filtering, that is, the $n^{th}$ 10 ms, and MEAN_BEP_TN$_{n-1}$ is an $(n-1)^{th}$ acquired value; MEAN_BEP$_{block,n}$ is an $n^{th}$ acquired value of the MEAN_BEP of the RTTI radio block.

$$\text{CV\_BEP\_TN}_n = (1 - e \cdot \frac{x_n}{R_n}) \cdot \text{CV\_BEP\_TN}_{n-1} + e \cdot \frac{x_n}{R_n} \cdot \text{CV\_BEP}_{block,n} \quad \text{(Formula 21)}$$

In Formula 21, CV_BEP_TN$_n$ is an $n^{th}$ acquired value of the BEP variance of the RTTI time slot pair, that is, the acquired value of the $n^{th}$ 10 ms, and CV_BEP_TN$_{n-1}$ is an $(n-1)^{th}$ acquired value; CV_BEP$_{block,n}$ is an $n^{th}$ acquired value of the BEP variance of the RTTI radio block.

After the time slot pair measurement values are computed, the overall channel measurement parameters on all the assigned channels are computed according to the computed time slot pair measurement values, and the method is that on the basis of one time slot pair, the time slot pair measurement values are averaged. The formulae in the following are adopted.

$$\text{MEAN\_BEP}_n = \frac{\sum_j R_n^{(j)} \cdot \text{MEAN\_BEP\_TN}_n^{(j)}}{\sum_j R_n^{(j)}}$$

(Formula 22)

$$\text{CV\_BEP}_n = \frac{\sum_j R_n^{(j)} \cdot \text{CV\_BEP\_TN}_n^{(j)}}{\sum_j R_n^{(j)}}$$

(Formula 23)

In the above formulae, n is an iteration index, j is a channel number, MEAN_BEP$_n$ is an $n^{th}$ acquired value of the overall MEAN_BEP, MEAN_BEP_TN$_n^{(j)}$ is an $n^{th}$ acquired value of the MEAN_BEP of the time slot pair corresponding to j, and R$_n$ is a reliability parameter of the quality parameters of the designated modulation type after being filtered.

CV_BEP$_n$ is an $n^{th}$ acquired value of the overall BEP variance, and $\text{CV\_BEP\_TN}_n^{(j)}$ is an $n^{th}$ acquired value of the BEP variance of the time slot pair corresponding to j.

It should be noted that, in the embodiment, the RTTI time slot pair measurement values, the BTTI single time slot measurement values, and the overall channel quality measurement parameters are for the designated modulation type.

According to the embodiment, the RTTI quality measurement parameters are reported to the network side through two reporting manners.

(1) Without changing the existing single time slot measurement value report field, the measurement values of the RTTI radio block based on two time slots (that is, one time slot pair) are reported by using the single time slot measurement value report field.

For example, the MEAN_BEP value in a measurement value Gaussian-Filtered Minimum Shift Keying (GMSK) modulation mode acquired by the terminal based on the time slot pair of a time slot 0 and a time slot 1 under the RTTI configuration may be reported on a field corresponding to the time slot 0 by default, and may also be reported on a field corresponding to the time slot 1 by default, or it is unified that the measurement values of the time slot pair are reported on the field corresponding to a smaller (larger) time slot of the time slots in the time slot pair, which is as shown in the following. <GMSK_MEAN_BEP TN0 : bit (4) >; the MEAN_BEP value acquired through the RTTI radio block based on the time slot 0 and the time slot 1 under the GMSK modulation mode

It may be definitely indicated in EGPRS Timeslot Link Quality Measurements IE or EGPRS Timeslot Link Quality Measurements Type 2 IE that, in the RTTI configuration, the MEAN_BEP measured based on each time slot pair is reported in GMSK_MEAN_BEP_TNx or 8PSK_MEAN_BEP_TNx, or MODULATION_1_MEAN_BEP_TNx, or MODULATION_2 _MEAN_BEP_TNx, in which TNx is the time slot of the low time slot number in each reporting time slot pair, that is, the RTTI quality measurement parameters are reported in the corresponding single time slot measurement value report field of the designated modulation mode.

(2) New time slot pair measurement value report fields are added, and the RTTI radio block measurement values based on two time slots (that is, one time slot pair) under a certain modulation mode are reported by using the new fields. One carrier has 8 time slots, that is, maximally 4 time slot pairs are configured, such that the new fields are 4 optional time slot pair measurement values.

For example, the MEAN_BEP value in the measurement value GMSK modulation mode acquired by the terminal based on the time slot pair of the time slot 0 and the time slot 1 under the RTTI configuration does not require the original field corresponding to the single time slot measurement value, and only needs to be reported in the fields corresponding to original the time slot pair measurement values, which are as shown in the following.

```
{ 0 |1 {0 <GMSK_MEAN_BEP _PAIR1 : bit (4) >
|1 < 8PSK_MEAN_BEP_PAIR1: bit (4) >}}


{0 | 1 { 0 <GMSK_MEAN_BEP_ PAIR2: bit (4) >
| 1 < 8PSK_MEAN_BEP_PAIR2: bit (4) >}}


{0 |1 { 0 <GMSK_MEAN_BEP_PAIR3: bit (4) >
| 1 < 8PSK_MEAN_BEP_PAIR3: bit (4) >}}


{0 | 1 { 0 <GMSK_MEAN_BEP_PAIR4: bit (4) >
| 1 1 < 8PSK_MEAN_BEP_PAIR4: bit (4) >}}
```

It may be definitely indicated in EGPRS Timeslot Link Quality Measurements IE or EGPRS Timeslot Link Quality Measurements Type 2 IE that, in the RTTI configuration, the MEAN_BEP measured based on each time slot pair is reported in GMSK_MEAN_BEP_PAIRx or 8PSK_MEAN_BEP_PAIRx, or MODULATION_1_MEAN_BEP_PAIRx, or MODULATION_2_MEAN_BEP_PAIRx, in which PAIRx is corresponding to each reporting time slot pair, that is, the RTTI quality measurement parameters are reported in the corresponding time slot pair measurement value report field of the designated modulation mode.

Similarly, in order to enable the terminal to identify the indication of the measurement mode under the RTTI configuration, two methods can be adopted.

(1) In an assignment or a reconfiguration message (for example, a packet downlink assignment message, multi-Temporary Block Flow (TBF) downlink assignment message, or packet time slot reconfiguration message), or multi-TBF time slot reconfiguration message, or packet Circuit Switch (CS) release indication message, or Packet Switch (PS) handover radio resource information field, or PS handover radio resource 2 information field, or Dual Transfer Mode (DTM, that is, a mode in which a circuit domain and a packet domain coexist) handover PS radio resource information field, or DTM handover PS radio resource 2 information field, the existing LINK_QUALITY_ MEASUREMENT_MODE and/or EGPRS2_LINK_QUALITY_MEASUREMENT_MODE field indicating the link quality measurement mode is not changed, only the definition is added to each option, and when the network performs the RTTI configuration on the terminal, the corresponding measurement mode indication indicates the measurement mode under the RTTI configuration.

The network side indicates the measurement mode through the LINK_QUALITY_MEASUREMENT_MODE field and/or the EGPRS2_LINK_QUALITY_MEASUREMENT_MODE field in the message or the field sent to the terminal. When the LINK_QUALITY_MEASUREMENT_MODE field indicates the RTTI configuration, the terminal must report the MEAN_BEP measure parameter of each time slot pair, and the LINK_QUALITY_MEASUREMENT_MODE field indicates the measurement parameter in the EGPRS Timeslot Link Quality Measurements IE or the EGPRS Timeslot Link Quality Measurements Type 2 IE.

(2) In an assignment or a reconfiguration message (for example, a packet downlink assignment message, multi-TBF downlink assignment message, or packet time slot reconfiguration message, or multi-TBF time slot reconfiguration message), or packet CS release indication message, or PS handover radio resource information field, or PS handover radio resource 2 information field, or DTM handover PS radio resource information field, or DTM handover PS radio resource 2 information field, the original field LINK_QUALITY_MEASUREMENT_MODE remains unchanged, and one field (at least 1 bit) is newly added, in which the newly added field is configured to indicate the measurement modes under different configurations, for example, the BTTI configuration or the RTTI configuration.

FIG. 4 is a schematic structural view of a terminal according to an embodiment of the present invention.

The terminal includes a burst receiving unit 401, a first computing unit 402, and a second computing unit 403, and further includes a third computing unit 404.

The burst receiving unit 401 is configured to receive bursts forming an RTTI radio block. The first computing unit 402 is configured to compute channel quality measurement parameters of the RTTI radio block according to channel quality measurement parameters of the bursts. The second computing unit 403 is configured to compute channel quality measurement parameters of a time slot pair corresponding to the RTTI radio block according to the channel quality measurement parameters of the RTTI radio block. The third computing unit 404 is configured to compute overall channel quality measurement parameters according to the channel quality measurement parameters of the RTTI time slot pair and/or channel quality measurement parameters of a BTTI time slot.

In the actual application, the first computing unit 402 computes RTTI radio block measurement values by adopting a 20 ms filtering and a corresponding forgetting factor. The second computing unit 403 matches a forgetting factor consistent with a filter for performing filtering, when computing the channel quality measurement parameters of the time slot pair corresponding to the RTTI radio block according to the channel quality measurement parameters of the RTTI radio block, in which the channel quality measurement parameters include a MEAN_BEP and/or a BEP variance.

Accordingly, one embodiment of the second computing unit 403 includes a parameter setting module, a time slot pair MEAN_BEP computing module, and a time slot pair BEP variance computing module.

The parameter setting module is configured to set a reliability parameter $R_n$ of quality parameters of a designated modulation type after being filtered according to a formula in the following:

$$R_n = (1-e) \cdot R_{n-1} + e \cdot \frac{(x_{n,a} + x_{n,b})}{2}, \quad R_{-1} = 0$$

In the above formula, n is an iteration index, e is a forgetting factor intended for 20 ms filtering, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist.

The time slot pair MEAN_BEP computing module is configured to compute a MEAN_BEP of the time slot pair according to one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n}$$

or

$$\text{MEAN\_BEP\_PAIR}_n = (1 - e \cdot \frac{x_{n,a} + x_{n,b}}{2R_n}) \cdot \text{MEAN\_BEP\_PAIR}_{n-1} +$$

$$e \cdot \frac{x_{n,a}\text{MEAN\_BEP}_{block,n,a} + x_{n,a}\text{MEAN\_BEP}_{block,n,b}}{2R_n}$$

In the above formula, n is an iteration index, $\text{MEAN\_BEP\_TN}_n$ or $\text{MEAN\_BEP\_PAIR}_n$ is an $n^{th}$ acquired value of the MEAN_BEP of the time slot pair, $\text{MEAN\_BEP}_{block,n,a}$ is a MEAN_BEP of the RTTI radio block of the first 10 ms of the $n^{th}$ 20 ms, and $\text{MEAN\_BEP}_{block,n,b}$ is a MEAN_BEP of the RTTI radio block of the last 10 ms of the $n^{th}$ 20 ms.

The time slot pair BEP variance computing module is configured to compute a BEP variance of the time slot pair according to one of formulae in the following:

$$\text{CV\_BEP\_TN}_n = (1 - e \cdot \frac{x_{n,a} + x_{n,b}}{2R_n}) \cdot \text{CV\_BEP\_TN}_{n-1} +$$

$$e \cdot \frac{x_{n,a}\text{CV\_BEP}_{block,n,a} + x_{n,b}\text{CV\_BEP}_{block,n,b}}{2R_n}$$

or

$$\text{CV\_BEP\_PAIR}_n = (1 - e \cdot \frac{x_{n,a} + x_{n,b}}{2R_n}) \cdot \text{CV\_BEP\_PAIR}_{n-1} +$$

$$e \cdot \frac{x_{n,a}\text{CV\_BEP}_{block,n,a} + x_{n,b}\text{CV\_BEP}_{block,n,b}}{2R_n}$$

In the above formula, n is an iteration index, $\text{CV\_BEP\_TN}_n$ or $\text{CV\_BEP\_PAIR}_n$ is an $n^{th}$ acquired value of the BEP variance of the time slot pair, $\text{CV\_BEP}_{block,n,a}$ is a BEP variance of the RTTI radio block of the first 10 ms of the $n^{th}$ 20 ms, and $\text{CV\_BEP}_{block,n,b}$ is a BEP variance of the RTTI radio block of the last 10 ms of the $n^{th}$ 20 ms.

Correspondingly, the third computing unit 404 includes an overall MEAN_BEP computing module and an overall BEP variance computing module.

The overall MEAN_BEP computing module is configured to compute an overall MEAN_BEP according to a formula in the following:

$$\text{MEAN\_BEP}_n = \frac{\sum_j R_n^{(j)} \cdot \text{MEAN\_BEP\_TN}_n^{(j)} + \sum_i R_n^{(i)} \cdot \text{MEAN\_BEP\_PAIR}_n^{(i)}}{\sum_j R_n^{(j)} + \sum_i R_n^{(i)}}$$

In the above formula, n is an iteration index during reporting, j is a BTTI channel number, i is an RTTI channel number, $\text{MEAN-BEP}_n$ is an $n^{th}$ acquired value of the overall MEAN_BEP, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $\text{MEAN\_BEP\_TN}_n^{(j)}$ is an $n^{th}$ acquired value of the MEAN_BEP of the BTTI time slot corresponding to j, and $\text{MEAN\_BEP\_PAIR}_n^{(i)}$ is an $n^{th}$ acquired value of the MEAN_BEP of the RTTI time slot pair corresponding to i.

The overall BEP variance computing module is configured to compute an overall BEP variance according to a formula in the following:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}}$$

In the above formula, n is an iteration index during reporting, j is a BTTI channel number, i is an RTTI channel number, $CV\_BEP_n$ is an $n^{th}$ acquired value of the overall BEP variance, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $CV\_BEP\_TN_n^{(j)}$ is an $n^{th}$ acquired value of the BEP variance of the BTTI time slot corresponding to j, and $CV\_BEP\_PAIR_n^{(i)}$ is an $n^{th}$ acquired value of the BEP variance of the RTTI time slot pair corresponding to i.

An example of the second computing unit 403 includes a parameter setting module, a time slot pair MEAN_BEP computing module, and a time slot pair BEP variance computing module.

The parameter setting module is configured to set a reliability parameter $R_n$ of quality parameters of a designated modulation type after being filtered according to a formula in the following.

$$R_n = (1-e) \cdot R_{n-1} + e \cdot x_n, \quad R_{-1} = 0$$

In the above formula, n is an iteration index, e is a forgetting factor intended for 10 ms filtering, and $X_n$ is a parameter representing whether quality parameters of a block of an $n^{th}$ 10 ms designated to be modulated exist.

The time slot pair MEAN_BEP computing module is configured to compute a MEAN_BEP of the RTTI time slot pair according to a formula in the following:

$$MEAN\_BEP\_TN_n = (1 - e \cdot \frac{x_n}{R_n}) \cdot MEAN\_BEP\_TN_{n-1} + e \cdot \frac{x_n}{R_n} \cdot MEAN\_BEP_{block,n}$$

In the above formula, n is an iteration index, $MEAN\_BEP\_TN_n$ is an $n^{th}$ acquired value of the MEAN_BEP of the RTTI time slot pair, and $MEAN\_BEP_{block,n}$ is an $n^{th}$ acquired value of the MEAN_BEP of the RTTI radio block.

The time slot pair BEP variance computing module is configured to compute the BEP variance of the RTTI time slot pair according to a formula in the following:

$$CV\_BEP\_TN_n = (1 - e \cdot \frac{x_n}{R_n}) \cdot CV\_BEP\_TN_{n-1} + e \cdot \frac{x_n}{R_n} \cdot CV\_BEP_{block,n}$$

In the above formula, n is an iteration index, $CV\_BEP\_TN_n$ is an $n^{th}$ acquired value of the BEP variance of the RTTI time slot pair, and $CV\text{-}BEP_{block,n}$ is an $n^{th}$ acquired value of the BEP variance of the RTTI radio block.

The third computing unit 404 may be implemented through the following modules, including an overall MEAN_BEP computing module and an overall BEP variance computing module.

The overall MEAN_BEP computing module is configured to compute an overall MEAN_BEP according to a formula in the following:

$$MEAN\_BEP_n = \frac{\sum_j R_n^{(j)} \cdot MEAN\_BEP\_TN_n^{(j)}}{\sum_j R_n^{(j)}}$$

In the above formula, n is an iteration index, $MEAN\_BEP_n$ is $n^{th}$ acquired value of the overall MEAN_BEP, and j is a BTTI channel number or an RTTI channel number, in which when j is the BTTI channel number, $R_n^{(j)}$ is a reliability parameter of quality parameters of a designated modulation type of the BTTI time slot corresponding to j after being filtered, and $MEAN\_BEP\_TN_n^{(j)}$ is an $n^{th}$ acquired value of the MEAN_BEP of the BTTI time slot corresponding to j; while when j is the RTTI channel number, $R_n^{(j)}$ is a reliability parameter of quality parameters of a designated modulation type of the RTTI time slot pair corresponding to j after being filtered, and $MEAN\_BEP\_TN_n^{(j)}$ is an $n^{th}$ acquired value of the MEAN_BEP of the RTTI time slot pair corresponding to j.

The overall BEP variance computing module is configured to compute an overall BEP variance according to a formula in the following:

$$CV\_BEP_n = \frac{\sum_j R_n^{(j)} \cdot CV\_BEP\_TN_n^{(j)}}{\sum_j R_n^{(j)}}$$

In the above formula, n is an iteration index, $CV\_BEP_n$ is an $n^{th}$ acquired value of the overall BEP variance, and j is a BTTI channel number or an RTTI channel number, in which when j is the BTTI channel number, $R_n^{(j)}$ is a reliability parameter of quality parameters of a designated modulation type of the BTTI time slot corresponding to j after being filtered, and $CV\_BEP\_TN_n^{(j)}$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, and $CV\_BEP\_TN_n^{(j)}$ is an $n^{th}$ acquired value of the BEP variance of the RTTI time slot pair corresponding to j.

Through the terminal according to the embodiment of the present invention, the channel quality measurement under the RTTI configuration may be implemented. The specific implementation may refer to the description in the embodiment of the method according to the present invention.

In an embodiment, the present invention further provides a channel quality measuring system, which includes a network side and a terminal. The network side is configured to deliver a measurement mode indication, in which the measurement mode indication is configured to indicate channel quality measurement parameters of a time slot pair reported under an RTTI configuration. The terminal is configured to perform measurement under the RTTI configuration according to the measurement mode indication.

The network side may indicate the measurement mode of the terminal through a LINK_QUALITY_ MEASUREMENT_MODE field.

Through the system of the embodiment, the channel quality measurement under different configurations (BTTI configuration and/or RTTI configuration) may be implemented.

Through the descriptions of the preceding embodiments, those skilled in the art may understand that the present invention may be implemented by using hardware only or by using software and a necessary universal hardware platform. However, in most cases, using software and a necessary universal hardware platform are preferred. Based on such understandings, all or part of the technical solution under the present invention that makes contributions to the prior art may be essentially embodied in the form of a software product. The software product may be stored in a storage medium, which can be a magnetic disk, a Compact Disk Read-Only Memory (CD-ROM), a Read-Only Memory (ROM) or a Random Access Memory (RAM). The software product includes a number of instructions that enable a computer device (personal computer, server, or network device) to execute the methods provided in the embodiments of the present invention.

Although the invention is described through several exemplary embodiments, the invention is not limited to such embodiments as the preceding embodiments are only intended to help understand the system and method of the present invention.

**Claims**

1. A channel quality measuring method for an EGPRS system, comprising:

   receiving (301) bursts forming a Reduced Transmission Time Interval (RTTI) radio block; and
   computing (302) channel quality measurement parameters of the RTTI radio block according to channel quality measurement parameters of the bursts, and computing channel quality measurement parameters of a time slot pair corresponding to the RTTI radio block according to the channel quality measurement parameters of the RTTI radio block; and
   the channel quality measurement parameters comprise a Mean Bit Error Probability (MEAN_BEP) and/or a BEP variance;
   wherein during the computing the channel quality measurement parameters of the time slot pair corresponding to the RTTI radio block according to the channel quality measurement parameters of the RTTI radio block, a reliability parameter $R_n$ of quality parameters of a designated modulation type after being filtered is set according to a formula in the following:

$$R_n = (1-e) \cdot R_{n-1} + e \cdot \frac{(x_{n,a} + x_{n,b})}{2}, \quad R_{-1} = 0 \quad ,$$

where n is an iteration index, e is a forgetting factor intended for 20 ms filtering and being the same as that for a basic transmission time interval (BTTi) radio block configuration, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist;

the MEAN_BEP of the time slot pair is computed according to any one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n}$$

or

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a} MEAN\_BEP_{block,n,a} + x_{n,a} MEAN\_BEP_{block,n,b}}{2R_n} \quad ,$$

where n is an iteration index, $MEAN\_BEP\_TN_n$ or $MEAN\_BEP\_PAIR_n$ is an $n^{th}$ acquired value of the MEAN_ BEP of the time slot pair, $MEAN\_BEP_{block,n,a}$ is a MEAN_BEP of the RTTI radio block of first 10 ms of the $n^{th}$ 20 ms, and $MEAN\_BEP_{block,n,b}$ is a MEAN_BEP of the RTTI radio block of last 10 ms of the $n^{th}$ 20 ms; and the BEP variance of the time slot pair is computed according to any one of formulae in the following:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a} CV\_BEP_{block,n,a} + x_{n,b} CV\_BEP_{block,n,b}}{2R_n}$$

or

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a} CV\_BEP_{block,n,a} + x_{n,b} CV\_BEP_{block,n,b}}{2R_n} \quad ,$$

where n is an iteration index, $CV\_BEP\_TN_n$ or $CV\_BEP\_PAIR_n$ is an $n^{th}$ acquired value of the BEP variance of the time slot pair, $CV\_BEP_{block,n,a}$ is a BEP variance of the RTTI radio block of first 10 ms of the $n^{th}$ 20 ms, and $CV\_BEP_{block,n,b}$ is a BEP variance of the RTTI radio block of last 10 ms of the $n^{th}$ 20 ms.

2. The method according to claim 1, further comprising:

computing overall channel quality measurement parameters according to the channel quality measurement parameters of the RTTI time slot pair and/or channel quality measurement parameters of a Basic Transmission Time Interval (BTTI) time slot.

3. The method according to claim 2, wherein during the computing the overall channel quality measurement parameters according to the channel quality measurement parameters of the RTTI time slot pair and/or the channel quality measurement parameters of the BTTI time slot, an overall MEAN_BEP is computed according to a formula in the following:

$$\text{MEAN\_BEP}_n = \frac{\sum_j R_n^{(j)} \cdot \text{MEAN\_BEP\_TN}_n^{(j)} + \sum_i R_n^{(i)} \cdot \text{MEAN\_BEP\_PAIR}_n^{(i)}}{\sum_j R_n^{(j)} + \sum_i R_n^{(i)}},$$

where n is an iteration index during reporting, j is a BTTI channel number, i is an RTTI channel number, MEAN_BEP$_n$ is an $n^{th}$ acquired value of the overall MEAN BEP, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, MEAN_BEP_TN$_n^{(i)}$ is an $n^{th}$ acquired value of the MEAN_BEP of the BTTI time slot corresponding to j, and MEAN_BEP_PAIR$_n^{(i)}$ is an $n^{th}$ acquired value of the MEAN_BEP of the RTTI time slot pair corresponding to i; and

an overall BEP variance is computed according to a formula in the following:

$$\text{CV\_BEP}_n = \frac{\sum_j R_n^{(j)} \cdot \text{CV\_BEP\_TN}_n^{(j)} + \sum_i R_n^{(i)} \cdot \text{CV\_BEP\_PAIR}_n^{(i)}}{\sum_j R_n^{(j)} + \sum_i R_n^{(i)}},$$

where n is an iteration index during reporting, j is a BTTI channel number, i is an RTTI channel number, CV_BEP$_n$ is an $n^{th}$ acquired value of the overall BEP variance, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, CV_BEP_TN$_n^{(j)}$ is an $n^{th}$ acquired value of the BEP variance of the BTTI time slot corresponding to j, and CV_BEP_PAIR$_n^{(i)}$ is an $n^{th}$ acquired value of the BEP variance of the RTTI time slot pair corresponding to i.

4. The method according to claim 2, wherein during the computing the overall channel quality measurement parameters according to the channel quality measurement parameters of the RTTI time slot pair and/or the channel quality measurement parameters of the BTTI time slot, an overall MEAN_BEP is computed according to a formula in the following:

$$\text{MEAN\_BEP}_n = \frac{\sum_j R_n^{(j)} \cdot \text{MEAN\_BEP\_TN}_n^{(j)}}{\sum_j R_n^{(j)}},$$

where n is an iteration index, MEAN_BEP$_n$ is an $n^{th}$ acquired value of the overall MEAN_BEP, and j is a BTTI channel number or an RTTI channel number; when j is the BTTI channel number, $R_n^{(j)}$ is a reliability parameter of quality parameters of a designated modulation type of the BTTI time slot corresponding to j after being filtered, and MEAN_BEP_TN$_n^{(j)}$ is an $n^{th}$ acquired value of the MEAN_BEP of the BTTI time slot corresponding to j; while when j is the RTTI channel number, $R_n^{(j)}$ is a reliability parameter of quality parameters of a designated modulation type of the RTTI time slot pair corresponding to j after being filtered, and MEAN_BEP_TN$_n^{(j)}$ is an $n^{th}$ acquired value of the MEAN_BEP of the RTTI time slot pair corresponding to j; and

an overall BEP variance is computed according to a formula in the following:

$$CV\_BEP_n = \frac{\sum\limits_{j} R_n^{(j)} \cdot CV\_BEP\_TN_n^{(j)}}{\sum\limits_{j} R_n^{(j)}},$$

where n is an iteration index, $CV\_BEP_n$ is an $n^{th}$ acquired value of the overall BEP variance, and j is a BTTI channel number or an RTTI channel number; when j is the BTTI channel number, $R_n^{(j)}$ is a reliability parameter of quality parameters of a designated modulation type of the BTTI time slot corresponding to after being filtered, and $CV\_BEP\_TN_n^{(j)}$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, and $CV\_BEP\_TN_n^{(j)}$ is an $n^{th}$ acquired value of the BEP variance of the RTTI time slot pair corresponding to j.

5. The method according to any one of claims 1 to 4, wherein before the receiving the bursts forming the RTTI radio block, the method further comprises:

   receiving a measurement mode indication of a network side, wherein the measurement mode indication is configured to indicate the channel quality measurement parameters of the time slot pair reported under an RTTI configuration; and
   performing measurement under the RTTI configuration according to the measurement mode indication.

6. A method for reporting channel quality measurement parameters, comprising:

   reporting Reduced Transmission Time Interval (RTTI) channel quality measurement parameters through a single time slot measurement value report field corresponding to any time slot in a time slot pair of an RTTI radio block; or
   reporting RTTI channel quality measurement parameters through an added time slot pair measurement value report field;
   wherein the RTTI channel quality measurement parameters are measured according to any one of claims 1-5.

7. A terminal for an EGPRS system, comprising:

   a burst receiving unit (401), configured to receive bursts forming a Reduced Transmission Time Interval (RTTI) radio block;
   a first computing unit (402), configured to compute channel quality measurement parameters of the RTTI radio block according to channel quality measurement parameters of the bursts; and
   a second computing unit (403), configured to compute channel quality measurement parameters of a time slot pair corresponding to the RTTI radio block according to the channel quality measurement parameters of the RTTI radio block;
   wherein the second computing unit (403) comprises:

   a parameter setting module, configured to set a reliability parameter $R_n$ of quality parameters of a designated modulation type after being filtered according to a formula in the following:

$$R_n = (1-e) \cdot R_{n-1} + e \cdot \frac{(x_{n,a} + x_{n,b})}{2}, \quad R_{-1} = 0,$$

   where n is an iteration index, e is a forgetting factor intended for 20 ms filtering and being the same as that for a basic transmission time interval (BTTI) radio block configuration, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist;

a time slot pair Mean Bit Error Probability (MEAN_BEP) computing module, configured to compute a MEAN_ BEP of the time slot pair according to any one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a}MEAN\_BEP_{block,n,a} + x_{n,a}MEAN\_BEP_{block,n,b}}{2R_n}$$

or

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a}MEAN\_BEP_{block,n,a} + x_{n,a}MEAN\_BEP_{block,n,b}}{2R_n}$$,

where n is an iteration index, $MEAN\_BEP\_TN_n$ or $MEAN\_BEP\_PAIR_n$ is an $n^{th}$ acquired value of the MEAN_ BEP of the time slot pair, $MEAN\_BEP_{block,n,a}$ is a MEAN_BEP of the RTTI radio block of first 10 ms of the $n^{th}$ 20 ms, and $MEAN\_BEP_{block,n,b}$ is a MEAN_BEP of the RTTI radio block of last 10 ms of the $n^{th}$ 20 ms; and
a time slot pair BEP variance computing module, configured to compute a BEP variance of the time slot pair according to any one of formulae in the following:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a}CV\_BEP_{block,n,a} + x_{n,b}CV\_BEP_{block,n,b}}{2R_n}$$

or

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a}CV\_BEP_{block,n,a} + x_{n,b}CV\_BEP_{block,n,b}}{2R_n}$$,

where n is an iteration index, $CV\_BEP\_TN_n$ or $CV\_BEP\_PAIR_n$ is an $n^{th}$ acquired value of the BEP variance of the time slot pair, $CV\_BEP_{block,n,a}$ is a BEP variance of the RTTI radio block of first 10 ms of the $n^{th}$ 20 ms, and $CV\_BEP_{block,n,b}$ is a BEP variance of the RTTI radio block of last 10 ms of the $n^{th}$ 20 ms.

**8.** The terminal according to claim 7, further comprising:

a third computing unit (404), configured to compute overall channel quality measurement parameters according to the channel quality measurement parameters of the RTTI time slot pair and/or channel quality measurement parameters of a Basic Transmission Time Interval (BTTI) time slot.

**9.** The terminal according to claim 8, wherein the third computing unit comprises:

an overall MEAN_BEP computing module, configured to compute an overall MEAN_BEP according to a formula in the following:

$$MEAN\_BEP_n = \frac{\sum_j R_n^{(j)} \cdot MEAN\_BEP\_TN_n^{(j)} + \sum_i R_n^{(i)} \cdot MEAN\_BEP\_PAIR_n^{(i)}}{\sum_j R_n^{(j)} + \sum_i R_n^{(i)}},$$

where n is an iteration index during reporting, j is a BTTI channel number, i is an RTTI channel number, MEAN_BEP is an $n^{th}$ acquired value of the overall MEAN_BEP, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, MEAN_BEP_TN$_n^{(j)}$ is an $n^{th}$ acquired value of the MEAN_BEP of the BTTI time slot corresponding to j, and MEAN_BEP_PAIR$_n^{(i)}$ is an $n^{th}$ acquired value of the MEAN_BEP of the RTTI time slot pair corresponding to i; and

an overall BEP variance computing module, configured to compute an overall BEP variance according to a formula in the following:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}},$$

where n is an iteration index during reporting, j is a BTTI channel number, i is an RTTI channel number, CV_BEP$_n$ is an $n^{th}$ acquired value of the overall BEP variance, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, CV_BEP_TN$_n^{(j)}$ is an $n^{th}$ acquired value of the BEP variance of the BTTI time slot corresponding to j, and CV_BEP_PAIR$_n^{(i)}$ is an $n^{th}$ acquired value of the BEP variance of the RTTI time slot pair corresponding to i.

10. The terminal according to claim 8, wherein the third computing unit comprises:

an overall MEAN_BEP computing module, configured to compute an overall MEAN_BEP according to a formula in the following:

$$MEAN\_BEP_n = \frac{\sum_j R_n^{(j)} \cdot MEAN\_BEP\_TN_n^{(j)}}{\sum_j R_n^{(j)}},$$

where n is an iteration index, MEAN_BEP$_n$ is an $n^{th}$ acquired value of the overall MEAN_BEP, and j is a BTTI channel number or an RTTI channel number; when j is the BTTI channel number, $R_n^{(j)}$ is a reliability parameter of quality parameters of a designated modulation type of the BTTI time slot corresponding to j after being filtered, and MEAN_BEP_TN$_n^{(j)}$is an $n^{th}$ acquired value of the MEAN_BEP of the BTTI time slot corresponding to j; while when j is the RTTI channel number, $R_n^{(j)}$ is a reliability parameter of quality parameters of a designated modulation type of the RTTI time slot pair corresponding to j after being filtered, and MEAN_BEP_TN$_n^{(j)}$ is an $n^{th}$ acquired value of the MEAN_BEP of the RTTI time slot pair corresponding to j; and

an overall BEP variance computing module, configured to compute an overall BEP variance according to a formula in the following:

$$CV\_BEP_n = \frac{\sum_j R_n^{(j)} \cdot CV\_BEP\_TN_n^{(j)}}{\sum_j R_n^{(j)}},$$

where n is an iteration index, $CV\_BEP_n$ is an $n^{th}$ acquired value of the overall BEP variance, and j is a BTTI channel number or an RTTI channel number; when j is the BTTI channel number, $R_n^{(j)}$ is a reliability parameter of quality parameters of a designated modulation type of the BTTI time slot corresponding to j after being filtered, and $CV\_BEP\_TN_n^{(j)}$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, and $CV\_BEP\_TN_n^{(j)}$ is an $n^{th}$ acquired value of the BEP variance of the RTTI time slot pair corresponding to j.

**11.** A channel quality measuring system, comprising:

a network side, configured to deliver a measurement mode indication, wherein the measurement mode indication is configured to indicate channel quality measurement parameters of a time slot pair reported under a Reduced Transmission Time Interval (RTTI) configuration; and
a terminal, according to any one of claims 7-10, and configured to perform measurement under the RTTI configuration according to the measurement mode indication.

**Patentansprüche**

**1.** Kanalqualitätsmessverfahren für ein EGPRS-System, wobei das Verfahren Folgendes umfasst:

Empfangen (301) von Bursts, die einen Funkblock mit verringertem Übertragungszeitintervall (RTTI-Funkblock) bilden; und
Berechnen (302) von Kanalqualitätsmessungs-Parametern des RTTI-Funkblocks in Übereinstimmung mit Kanalqualitätsmessungs-Parametern der Bursts und Berechnen von Kanalqualitätsmessungs-Parametern eines dem RTTI-Funkblock entsprechenden Zeitschlitzpaars in Übereinstimmung mit den Kanalqualitätsmessungs-Parametern des RTTI-Funkblocks; und
wobei die Kanalqualitätsmessungs-Parameter eine mittlere Bitfehlerwahrscheinlichkeit (MEAN_BEP) und/oder eine BEP-Varianz umfassen; wobei während der Berechnung der Kanalqualitätsmessungs-Parameter des dem RTTI-Funkblock entsprechenden Zeitschlitzpaars in Übereinstimmung mit den Kanalqualitätsmessungs-Parametern des RTTI-Funkblocks ein Zuverlässigkeitsparameter $R_n$ von Qualitätsparametern eines bestimmten Modulationstyps, nachdem gefiltert worden ist, in Übereinstimmung mit der folgenden Formel eingestellt wird:

$$R_n = (1-e) \cdot R_{n-1} + e \cdot \frac{(x_{n,a} + x_{n,b})}{2}, \quad R_{-1} = 0 \; ,$$

wobei n ein Iterationsindex ist, e ein Vergessensfaktor ist, der für die 20-ms-Filterung bestimmt ist und derselbe wie der für eine Basis-Übertragungszeitintervall-Funkblockkonfiguration (BTTI-Funkblockkonfiguration) ist, $X_{n,a}$ ein Parameter ist, der repräsentiert, ob Qualitätsparameter eines Blocks der ersten 10 ms von n-ten 20 ms, die moduliert werden sollen, existieren, und $X_{n,b}$ ein Parameter ist, der repräsentiert, ob Qualitätsparameter eines Blocks der letzten 10 ms der n-ten 20 ms, die moduliert werden sollen, existieren;
wobei die MEAN_BEP des Zeitschlitzpaars in Übereinstimmung mit einer der folgenden Formeln berechnet wird:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n}$$

oder

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a}MEAN\_BEP_{block,n,a} + x_{n,a}MEAN\_BEP_{block,n,b}}{2R_n} \quad ,$$

wobei n ein Iterationsindex ist, $MEAN\_BEP\_TN_n$ oder $MEAN\_BEP\_PAIR_n$ ein n-ter erfasster Wert der MEAN_ BEP des Zeitschlitzpaars ist, $MEAN\_BEP_{block,n,a}$ eine MEAN_BEP des RTTI-Funkblocks der ersten 10 ms der n-ten 20 ms ist und $MEAN\_BEP_{block,n,b}$ eine MEAN_BEP des RTTI-Funkblocks der letzten 10 ms der n-ten 20 ms ist; und
die BEP-Varianz des Zeitschlitzpaars in Übereinstimmung mit einer der folgenden Formeln berechnet wird:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a}CV\_BEP_{block,n,a} + x_{n,b}CV\_BEP_{block,n,b}}{2R_n}$$

oder

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a}CV\_BEP_{block,n,a} + x_{n,b}CV\_BEP_{block,n,b}}{2R_n} \quad ,$$

wobei n ein Iterationsindex ist, $CV\_BEP\_TN_n$ oder $CV\_BEP\_PAIR_n$ ein n-ter erfasster Wert der BEP-Varianz des Zeitschlitzpaars ist, $CV\_BEP_{block,n,a}$ eine BEP-Varianz des RTTI-Funkblocks der ersten 10 ms der n-ten 20 ms ist und
$CV\_BEP_{block,n,b}$ eine BEP-Varianz des RTTI-Funkblocks der letzten 10 ms der n-ten 20 ms ist.

**2.** Verfahren nach Anspruch 1, das ferner Folgendes umfasst:

Berechnen von Gesamt-Kanalqualitätsmessungs-Parametern in Übereinstimmung mit den Kanalqualitätsmessungs-Parametern des RTTI-Zeitschlitzpaars und/oder mit den Kanalqualitätsmessungs-Parametern eines Basis-Übertragungszeitintervall-Zeitschlitzes (BTTI-Zeitschlitzes).

**3.** Verfahren nach Anspruch 2, wobei während des Berechnens der Gesamt-Kanalqualitätsmessungs-Parameter in Übereinstimmung mit den Kanalqualitätsmessungs-Parametern des RTTI-Zeitschlitzpaars und/oder mit den Kanalqualitätsmessungs-Parametern des BTTI-Zeitschlitzes eine Gesamt-MEAN_BEP in Übereinstimmung mit der folgenden Formel berechnet wird:

$$MEAN\_BEP_n = \frac{\sum_j R_n^{(j)} \cdot MEAN\_BEP\_TN_n^{(j)} + \sum_i R_n^{(i)} \cdot MEAN\_BEP\_PAIR_n^{(i)}}{\sum_j R_n^{(j)} + \sum_i R_n^{(i)}} \quad ,$$

wobei n ein Iterationsindex während der Berichterstattung ist, j eine BTTI-Kanalnummer ist, i eine RTTI-Kanalnummer ist, $MEAN\_BEP_n$ ein n-ter erfasster Wert der Gesamt-MEAN_BEP ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, $R_n^{(i)}$ ein Zuverlässigkeitsparameter von Qualitätsparametern eines bestimmten Modulationstyps des RTTI-Zeitschlitzpaars ist, das i entspricht, nachdem gefiltert worden ist, $MEAN\_BEP\_TN_n^{(j)}$ ein n-ter erfasster Wert der MEAN_BEP des BTTI-Zeitschlitzes ist, der j entspricht, und $MEAN\_BEP\_PAIR_n^{(i)}$ ein n-ter erfasster Wert der MEAN_BEP des RTTI-Zeitschlitzpaars ist, das i entspricht; und
eine Gesamt-BEP-Varianz in Übereinstimmung mit der folgenden Formel berechnet wird:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}},$$

wobei n ein Iterationsindex während der Berichterstattung ist, j eine BTTI-Kanalnummer ist, i eine RTTI-Kanalnummer ist, $CV\_BEP_n$ ein n-ter erfasster Wert der Gesamt-BEP-Varianz ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, $R_n^{(i)}$ ein Zuverlässigkeitsparameter von Qualitätsparametern eines bestimmten Modulationstyps des RTTI-Zeitschlitzpaars ist, das i entspricht, nachdem gefiltert worden ist, $CV\_BEP\_TN_n^{(j)}$ ein n-ter erfasster Wert der BEP-Varianz des BTTI-Zeitschlitzes ist, der j entspricht, und $CV\_BEP\_PAIR_n^{(i)}$ ein n-ter erfasster Wert der BEP-Varianz des RTTI-Zeitschlitzpaars ist, das i entspricht.

4. Verfahren nach Anspruch 2, wobei während des Berechnens der Gesamt-Kanalqualitätsmessungs-Parameter in Übereinstimmung mit den Kanalqualitätsmessungs-Parametern des RTTI-Zeitschlitzpaars und/oder mit den Kanalqualitätsmessungs-Parametern des BTTI-Zeitschlitzes eine Gesamt-MEAN_BEP in Übereinstimmung mit der folgenden Formel berechnet wird:

$$MEAN\_BEP_n = \frac{\sum_j R_n^{(j)} \cdot MEAN\_BEP\_TN_n^{(j)}}{\sum_j R_n^{(j)}},$$

wobei n ein Iterationsindex ist, $MEAN\_BEP_n$ ein n-ter erfasster Wert des Gesamt-MEAN_BEP ist und j eine BTTI-Kanalnummer ist oder eine RTTI-Kanalnummer ist; wenn j die BTTI-Kanalnummer ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, und $MEAN\_BEP\_TN_n^{(j)}$ ein n-ter erfasster Wert der MEAN_BEP des BTTI-Zeitschlitzes ist, der j entspricht; wobei, wenn j die RTTI-Kanalnummer ist, $R_n^{(j)}$ ein Zuverlässigkeitsparameter von Qualitätsparametern eines bestimmten Modulationstyps des RTTI-Zeitschlitzpaars ist, das j entspricht, nachdem gefiltert worden ist, und $MEAN\_BEP\_TN_n^{(j)}$ ein n-ter erfasster Wert der MEAN_BEP des RTTI-Zeitschlitzpaars ist, das j entspricht; und wobei eine Gesamt-BEP-Varianz in Übereinstimmung mit der folgenden Formel berechnet wird:

$$CV\_BEP_n = \frac{\sum_j R_n^{(j)} \cdot CV\_BEP\_TN_n^{(j)}}{\sum_j R_n^{(j)}},$$

wobei n ein Iterationsindex ist, $CV\_BEP_n$ ein n-ter erfasster Wert der Gesamt-BEP-Varianz ist und j eine BTTI-Kanalnummer oder eine RTTI-Kanalnummer ist; wenn j die BTTI-Kanalnummer ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, und $CV\_BEP\_TN_n^{(j)}$ ein n-ter erfasster Wert der BEP-Varianz des BTTI-Zeitschlitzes ist, der j entspricht; während, wenn j die RTTI-Kanalnummer ist, $R_n^{(j)}$ ein Zuverlässigkeitsparameter von Qualitätsparametern eines bestimmten Modulationstyps des RTTI-Zeitschlitzpaars ist, das j entspricht, nachdem gefiltert worden ist, und $CV\_BEP\_TN_n^{(j)}$ ein n-ter erfasster Wert der BEP-Varianz des RTTI-Zeitschlitzpaars ist, das j entspricht.

5. Verfahren nach einem der Ansprüche 1 bis 4, wobei vor dem Empfang der Bursts, die den RTTI-Funkblock bilden, das Verfahren ferner Folgendes umfasst:

Empfangen einer Messungsbetriebsartangabe einer Netzseite, wobei die Messungsbetriebsartangabe zur Angabe der Kanalqualitätsmessungs-Parameter des Zeitschlitzpaars, die gemäß einer RTTI-Konfiguration berichtet werden, konfiguriert ist; und

Ausführen einer Messung gemäß der RTTI-Konfiguration in Übereinstimmung mit der Messungsbetriebsartangabe.

6. Verfahren zum Berichten von Kanalqualitätsmessungs-Parametern, wobei das Verfahren Folgendes umfasst:

Berichten von Kanalqualitätsmessungs-Parametern eines verringerten Übertragungszeitintervalls (RTTI-Kanalqualitätsmessungs-Parametern) über ein einzelnes Zeitschlitzmesswert-Berichtsfeld entsprechend irgendeinem Zeitschlitz in einem Zeitschlitzpaar eines RTTI-Funkblocks; oder

Berichten von RTTI-Kanalqualitätsmessungs-Parametern über ein hinzugefügtes Zeitschlitzpaarmesswert-Berichtsfeld;

wobei die RTTI-Kanalqualitätsmessungs-Parameter in Übereinstimmung mit einem der Ansprüche 1-5 gemessen werden.

7. Endgerät für ein EGPRS-System, wobei das Endgerät Folgendes umfasst:

eine Burst-Empfangseinheit (401), die zum Empfangen von Bursts, die einen Funkblock mit verringertem Übertragungszeitintervall (RTTI-Funkblock) bilden, konfiguriert ist;

eine erste Berechnungseinheit (402), die zum Berechnen von Kanalqualitätsmessungs-Parametern des RTTI-Funkblocks in Übereinstimmung mit Kanalqualitätsmessungs-Parametern der Bursts konfiguriert ist; und

eine zweite Berechnungseinheit (403), die zum Berechnen von Kanalqualitätsmessungs-Parametern eines Zeitschlitzpaars, das dem RTTI-Funkblock entspricht, in Übereinstimmung mit den Kanalqualitätsmessungs-Parametern des RTTI-Funkblocks konfiguriert ist;

wobei die zweite Berechnungseinheit (403) Folgendes umfasst:

ein Parametereinstellmodul, das zum Einstellen eines Zuverlässigkeitsparameters $R_n$ von Qualitätsparametern eines bestimmten Modulationstyps, nachdem gefiltert worden ist, in Übereinstimmung mit der folgenden Formel konfiguriert ist:

$$R_n = (1-e) \cdot R_{n-1} + e \cdot \frac{(x_{n,a} + x_{n,b})}{2}, \quad R_{-1} = 0,$$

wobei n ein Iterationsindex ist, e ein Vergessensfaktor ist, der für eine 20-ms-Filterung bestimmt ist und der derselbe wie der für eine Basis-Übertragungszeitintervall-Funkblockkonfiguration (BTTI-Funkblockkonfiguration) ist, $X_{n,a}$ ein Parameter ist, der repräsentiert, ob Qualitätsparameter eines Blocks der ersten 10 ms von n-ten 20 ms, die moduliert werden sollen, existieren, und $X_{n,b}$ ein Parameter ist, der repräsentiert, ob Qualitätsparameter eines Blocks der letzten 10 ms der n-ten 20 ms, die moduliert werden sollen, existieren;

ein Modul für die Berechnung der mittleren Bitfehlerwahrscheinlichkeit eines Zeitschlitzpaars (MEAN_BEP-Berechnungsmodul), das zum Berechnen einer MEAN_BEP des Zeitschlitzpaars in Übereinstimmung mit einer der folgenden Formeln konfiguriert ist:

$$MEAN\_BEP\_TN_n = (1 - e \cdot \frac{x_{n,a} + x_{n,b}}{2R_n}) \cdot MEAN\_BEP\_TN_{n-1}$$
$$+ e \cdot \frac{x_{n,a} MEAN\_BEP_{block,n,a} + x_{n,a} MEAN\_BEP_{block,n,b}}{2R_n}$$

oder

$$\text{MEAN\_BEP\_PAIR}_{n} = (1 - e \cdot \frac{x_{n,a} + x_{n,b}}{2R_{n}}) \cdot \text{MEAN\_BEP\_PAIR}_{n-1} +$$

$$e \cdot \frac{x_{n,a}\text{MEAN\_BEP}_{block,n,a} + x_{n,a}\text{MEAN\_BEP}_{block,n,b}}{2R_{n}} \quad ,$$

wobei n ein Iterationsindex ist, MEAN_BEP_TN$_n$ oder MEAN_BEP_PAIR$_n$ ein n-ter erfasster Wert der MEAN_BEP des Zeitschlitzpaars ist, MEAN_BEP$_{block,n,a}$ eine MEAN_BEP des RTTI-Funkblocks der ersten 10 ms der n-ten 20 ms ist und MEAN_BEP$_{block,n,b}$ eine MEAN_BEP des RTTI-Funkblocks der letzten 10 ms der n-ten 20 ms ist; und
ein Zeitschlitzpaar-BEP-Varianz-Berechnungsmodul, das zum Berechnen einer BEP-Varianz des Zeitschlitzpaars in Übereinstimmung mit einer der folgenden Formeln konfiguriert ist:

$$\text{CV\_BEP\_TN}_{n} = (1 - e \cdot \frac{x_{n,a} + x_{n,b}}{2R_{n}}) \cdot \text{CV\_BEP\_TN}_{n-1} +$$

$$e \cdot \frac{x_{n,a}\text{CV\_BEP}_{block,n,a} + x_{n,b}\text{CV\_BEP}_{block,n,b}}{2R_{n}}$$

oder

$$\text{CV\_BEP\_PAIR}_{n} = (1 - e \cdot \frac{x_{n,a} + x_{n,b}}{2R_{n}}) \cdot \text{CV\_BEP\_PAIR}_{n-1} +$$

$$e \cdot \frac{x_{n,a}\text{CV\_BEP}_{block,n,a} + x_{n,b}\text{CV\_BEP}_{block,n,b}}{2R_{n}} \quad ,$$

wobei n ein Iterationsindex ist, CV_BEP_TN$_n$ oder CV_BEP_PAIR$_n$ ein n-ter erfasster Wert der BEP-Varianz des Zeitschlitzpaars ist, CV_BEP$_{block,n,a}$ eine BEP-Varianz des RTTI-Funkblocks der ersten 10 ms der n-ten 20 ms ist und CV_BEP$_{block,n,b}$ eine BEP-Varianz des RTTI-Funkblocks der letzten 10 ms der n-ten 20 ms ist.

**8.** Endgerät nach Anspruch 7, das ferner Folgendes umfasst:

eine dritte Berechnungseinheit (404), die zum Berechnen von Gesamt-Kanalqualitätsmessungs-Parametern in Übereinstimmung mit den Kanalqualitätsmessungs-Parametern des RTTI-Zeitschlitzpaars und/oder mit den Kanalqualitätsmessungs-Parametern eines Basis-Übertragungszeitintervall-Zeitschlitzes (BTTI-Zeitschlitzes) konfiguriert ist.

**9.** Endgerät nach Anspruch 8, wobei die dritte Berechnungseinheit Folgendes umfasst:

ein Gesamt-MEAN_BEP-Berechnungsmodul, das zum Berechnen einer Gesamt-MEAN_BEP in Übereinstimmung mit der folgenden Formel konfiguriert ist:

$$\text{MEAN\_BEP}_{n} = \frac{\sum_{j} R_{n}^{(j)} \cdot \text{MEAN\_BEP\_TN}_{n}^{(j)} + \sum_{i} R_{n}^{(i)} \cdot \text{MEAN\_BEP\_PAIR}_{n}^{(i)}}{\sum_{j} R_{n}^{(j)} + \sum_{i} R_{n}^{(i)}} \quad ,$$

wobei n ein Iterationsindex während der Berichterstattung ist, j eine BTTI-Kanalnummer ist, i eine RTTI-Kanalnummer ist, MEAN_BEP$_n$ ein n-ter erfasster Wert der Gesamt-MEAN_BEP ist, R$_n^{(j)}$ ein Zuverlässigkeitsparameter von Qualitätsparametern eines bestimmten Modulationstyps des BTTI-Zeitschlitzes ist, der j entspricht, nachdem gefiltert worden ist, $R_n^{(i)}$ ein Zuverlässigkeitsparameter von Qualitätsparametern eines bestimmten Modulationstyps des RTTI-Zeitschlitzpaars ist, das i entspricht, nachdem gefiltert worden ist, MEAN_BEP_TN$_n^{(j)}$ ein n-ter erfasster Wert der MEAN_BEP des BTTI-Zeitschlitzes ist, der j entspricht, und MEAN_BEP_PAIR$_n^{(i)}$ ein n-ter erfasster Wert der MEAN_BEP des RTTI-Zeitschlitzpaars ist, das i entspricht; und

ein Gesamt-BEP-Varianz-Berechnungsmodul, das zum Berechnen einer Gesamt-BEP-Varianz in Übereinstimmung mit der folgenden Formel konfiguriert ist:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}},$$

wobei n ein Iterationsindex während der Berichterstattung ist, j eine BTTI-Kanalnummer ist, i eine RTTI-Kanalnummer ist, $CV\_BEP_n$ ein n-ter erfasster Wert der Gesamt-BEP-Varianz ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, $R_n^{(i)}$ ein Zuverlässigkeitsparameter von Qualitätsparametern eines bestimmten Modulationstyps des RTTI-Zeitschlitzpaars ist, das i entspricht, nachdem gefiltert worden ist, $CV\_BEP\_TN_n^{(j)}$ ein n-ter erfasster Wert der BEP-Varianz des BTTI-Zeitschlitzes ist, der j entspricht, und $CV\_BEP\_PAIR_n^{(i)}$ ein n-ter erfasster Wert der BEP-Varianz des RTTI-Zeitschlitzpaars ist, das i entspricht.

**10.** Endgerät nach Anspruch 8, wobei die dritte Berechnungseinheit Folgendes umfasst:

ein Gesamt-MEAN_BEP-Berechnungsmodul, das zum Berechnen einer Gesamt-MEAN_BEP in Übereinstimmung mit der folgenden Formel konfiguriert ist:

$$MEAN\_BEP_n = \frac{\sum_j R_n^{(j)} \cdot MEAN\_BEP\_TN_n^{(j)}}{\sum_j R_n^{(j)}},$$

wobei n ein Iterationsindex ist, $MEAN\_BEP_n$ ein n-ter erfasster Wert des Gesamt-MEAN_BEP ist und j eine BTTI-Kanalnummer oder eine RTTI-Kanalnummer ist; wenn j die BTTI-Kanalnummer ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, und MEAN-BEP-TN$_n^{(j)}$ ein n-ter erfasster Wert der MEAN_BEP des BTTI-Zeitschlitzes ist, der j entspricht; während, wenn j die RTTI-Kanalnummer ist, $R_n^{(j)}$ ein Zuverlässigkeitsparameter von Qualitätsparametern eines bestimmten Modulationstyps des RTTI-Zeitschlitzpaars ist, das j entspricht, nachdem gefiltert worden ist, und MEAN_BEP_TN$_n^{(j)}$ ein n-ter erfasster Wert der MEAN_BEP des RTTI-Zeitschlitzpaars ist, das j entspricht; und ein Gesamt-BEP-Varianz-Berechnungsmodul, das zum Berechnen einer Gesamt-BEP-Varianz in Übereinstimmung mit der folgenden Formel konfiguriert ist:

$$CV\_BEP_n = \frac{\sum_j R_n^{(j)} \cdot CV\_BEP\_TN_n^{(j)}}{\sum_j R_n^{(j)}},$$

wobei n ein Iterationsindex ist, $CV\_BEP_n$ ein n-ter erfasster Wert der Gesamt-BEP-Varianz ist und j eine BTTI-Kanalnummer ist oder eine RTTI-Kanalnummer ist; wenn j die BTTI-Kanalnummer ist, $R_n^{(j)}$ ein Zuverlässigkeitsparameter von Qualitätsparametern eines bestimmten Modulationstyps des BTTI-Zeitschlitzes ist, der j entspricht, nachdem gefiltert worden ist, und $CV\_BEP\_TN_n^{(j)}$ ein n-ter erfasster Wert der BEP-Varianz des BTTI-Zeitschlitzes ist, der j entspricht; während, wenn j die RTTI-Kanalnummer ist, $R_n$ ein Zuverlässigkeitsparameter von Qualitätsparametern eines bestimmten Modulationstyps des RTTI-Zeitschlitzpaars ist, das j entspricht, nachdem gefiltert worden ist, und $CV\_BEP\_TN_n^{(j)}$ ein n-ter erfasster Wert der BEP-Varianz des RTTI-Zeitschlitzpaars ist, das j entspricht.

11. Kanalqualitätsmesssystem, das Folgendes umfasst:

eine Netzseite, die zum Liefern einer Messungsbetriebsartangabe konfiguriert ist, wobei die Messungsbetriebsartangabe zum Angeben von Kanalqualitätsmessungs-Parametern eines Zeitschlitzpaars, die gemäß einer Konfiguration eines verringerten Übertragungszeitintervalls (RTTI-Konfiguration) berichtet werden, konfiguriert ist; und
ein Endgerät nach einem der Ansprüche 7-10 und das dafür konfiguriert ist, eine Messung gemäß der RTTI-Konfiguration in Übereinstimmung mit der Messungsbetriebsartangabe auszuführen.

**Revendications**

1. Procédé de mesure de qualité de canal pour système EGPRS, comprenant :

la réception (301) de salves formant un bloc radio à Intervalle de Temps d'Émission Réduit (RTTI, Reduced Transmission Time Interval) ; et
le calcul (302) de paramètres de mesure de qualité de canal du bloc radio RTTI selon des paramètres de mesure de qualité de canal des salves, et le calcul de paramètres de mesure de qualité de canal d'une paire de créneaux temporels correspondant au bloc radio RTTI selon les paramètres de mesure de qualité de canal du bloc radio RTTI ; et
les paramètres de mesure de qualité de canal comprenant un paramètre de Probabilité d'Erreur sur les Bits Moyenne (MEAN_BEP) et/ou une variance BEP ;
dans lequel, pendant le calcul des paramètres de mesure de qualité de canal de la paire de créneaux temporels correspondant au bloc radio RTTI selon les paramètres de mesure de qualité de canal du bloc radio RTTI, un paramètre de fiabilité $R_n$ de paramètres de qualité d'un type de modulation désigné après filtrage est réglé conformément à la formule suivante :

$$R_n = (1-e) \cdot R_{n-1} + e \cdot \frac{(x_{n,a} + x_{n,b})}{2}, \; R_{-1} = 0,$$

où n est un indice d'itération, e est un facteur d'oubli destiné à un filtrage sur 20 ms et identique à celui correspondant à la configuration d'un bloc radio à Intervalle de Temps d'Émission de Base (BTTI, Basic Transmission Time Interval), $X_{n,a}$ est un paramètre indiquant s'il existe des paramètres de qualité d'un bloc constitué des premières 10 ms des $n^{\text{ièmes}}$ 20 ms désignées pour être modulées, et $X_{n,b}$ est un paramètre indiquant s'il existe des paramètres de qualité d'un bloc constitué des dernières 10 ms des $n^{\text{ièmes}}$ 20 ms désignées pour être modulées ;
le paramètre MEAN_BEP de la paire de créneaux temporels est calculé selon l'une quelconque des formules suivantes :

$$\text{MEAN\_BEP\_TN}_n = (1 - e \cdot \frac{x_{n,a} + x_{n,b}}{2R_n}) \cdot \text{MEAN\_BEP\_TN}_{n-1}$$

$$+ e \cdot \frac{x_{n,a}\text{MEAN\_BEP}_{bloc,n,a} + x_{n,a}\text{MEAN\_BEP}_{bloc,n,b}}{2R_n}$$

ou

$$\text{MEAN\_BEP\_PAIR}_n = (1 - e \cdot \frac{x_{n,a} + x_{n,b}}{2R_n}) \cdot \text{MEAN\_BEP\_PAIR}_{n-1} +$$

$$e \cdot \frac{x_{n,a}\text{MEAN\_BEP}_{bloc,n,a} + x_{n,a}\text{MEAN\_BEP}_{bloc,n,b}}{2R_n}$$

où n est un indice d'itération, $\text{MEAN\_BEP\_TN}_n$ ou $\text{MEAN\_BEP\_PAIR}_n$ est une $n^{ième}$ valeur acquise du paramètre MEAN_BEP de la paire de créneaux temporels, $\text{MEAN\_BEP}_{bloc,n,a}$ est un paramètre MEAN_BEP du bloc radio RTTI des premières 10 ms des $n^{ièmes}$ 20 ms, et $\text{MEAN\_BEP}_{bloc,n,b}$ est un paramètre MEAN_BEP du bloc radio RTTI des dernières 10 ms des $n^{ièmes}$ 20 ms ; et

la variance BEP de la paire de créneaux temporels est calculée selon l'une quelconque des formules suivantes :

$$\text{CV\_BEP\_TN}_n = (1 - e \cdot \frac{x_{n,a} + x_{n,b}}{2R_n}) \cdot \text{CV\_BEP\_TN}_{n-1} +$$

$$e \cdot \frac{x_{n,a}\text{CV\_BEP}_{bloc,n,a} + x_{n,b}\text{CV\_BEP}_{bloc,n,b}}{2R_n}$$

ou

$$\text{CV\_BEP\_PAIR}_n = (1 - e \cdot \frac{x_{n,a} + x_{n,b}}{2R_n}) \cdot \text{CV\_BEP\_PAIR}_{n-1} +$$

$$e \cdot \frac{x_{n,a}\text{CV\_BEP}_{bloc,n,a} + x_{n,b}\text{CV\_BEP}_{bloc,n,b}}{2R_n}$$

où n est un indice d'itération, $\text{CV\_BEP\_TN}_n$ ou $\text{CV\_BEP\_PAIR}_n$ est une $n^{ième}$ valeur acquise de la variance BEP de la paire de créneaux temporels, $\text{CV\_BEP}_{bloc,n,a}$ est une variance BEP du bloc radio RTTI des premières 10 ms des $n^{ièmes}$ 20 ms, et $\text{CV\_BEP}_{bloc,n,b}$ est une variance BEP du bloc radio RTTI des dernières 10 ms des $n^{ièmes}$ 20 ms.

2. Procédé selon la revendication 1, comprenant en outre :

le calcul de paramètres globaux de mesure de qualité de canal selon les paramètres de mesure de qualité de canal de la paire de créneaux temporels RTTI et/ou selon les paramètres de mesure de qualité de canal d'un créneau temporel à Intervalle de Temps d'Émission de Base (BTTI).

3. Procédé selon la revendication 2, dans lequel, pendant le calcul de paramètres globaux de mesure de qualité de canal selon les paramètres de mesure de qualité de canal de la paire de créneaux temporels RTTI et/ou selon les paramètres de mesure de qualité de canal du créneau temporel BTTI, un paramètre MEAN_BEP global est calculé conformément à la formule suivante :

$$\text{MEAN\_BEP}_n = \frac{\sum_j R_n^{(j)} \cdot \text{MEAN\_BEP\_TN}_n^{(j)} + \sum_i R_n^{(i)} \cdot \text{MEAN\_BEP\_PAIR}_n^{(j)}}{\sum_j R_n^{(j)} + \sum_i R_n^{(i)}},$$

où n est un indice d'itération pendant l'établissement du rapport, j est un numéro de canal BTTI, i est un numéro de canal RTTI, MEAN_BEP$_n$ est une n$^{ième}$ valeur acquise du paramètre MEAN_BEP global, R$_n^{(j)}$ est un paramètre de fiabilité de paramètres de qualité d'un type de modulation désigné du créneau temporel BTTI correspondant à j après filtrage, R$_n^{(i)}$ est un paramètre de fiabilité de paramètres de qualité d'un type de modulation désigné de la paire de créneaux temporels RTTI correspondant à i après filtrage, MEAN_BEP_TN$_n^{(j)}$ est une n$^{ième}$ valeur acquise du paramètre MEAN_BEP du créneau temporel BTTI correspondant à j, et MEAN_BEP_PAIR$_n^{(i)}$ est une n$^{ième}$ valeur acquise du paramètre MEAN_BEP de la paire de créneaux temporels RTTI correspondant à i ; et une variance BEP globale est calculée conformément à la formule suivante :

$$CV\_BEP_n = \frac{\sum\limits_{j} R_n^{(j)} \cdot CV\_BEP\_TN_n^{(j)} + \sum\limits_{i} R_n^{(i)} \cdot CV\_BEP\_PAIR_n^{(i)}}{\sum\limits_{j} R_n^{(j)} + \sum\limits_{i} R_n^{(i)}}$$

où n est un indice d'itération pendant l'établissement du rapport, j est un numéro de canal BTTI, i est un numéro de canal RTTI, CV_BEP$_n$ est une n$^{ième}$ valeur acquise de la variance BEP globale, R$_n^{(j)}$ est un paramètre de fiabilité de paramètres de qualité d'un type de modulation désigné du créneau temporel BTTI correspondant à j après filtrage, R$_n^{(i)}$ est un paramètre de fiabilité de paramètres de qualité d'un type de modulation désigné de la paire de créneaux temporels RTTI correspondant à i après filtrage, CV_BEP_TN$_n^{(j)}$ est une n$^{ième}$ valeur acquise de la variance BEP du créneau temporel BTTI correspondant à j, et CV_BEP_PAIR$_n^{(i)}$ est une n$^{ième}$ valeur acquise de la variance BEP de la paire de créneaux temporels RTTI correspondant à i.

**4.** Procédé selon la revendication 2, dans lequel, pendant le calcul des paramètres globaux de mesure de qualité de canal conformément aux paramètres de mesure de qualité de canal de la paire de créneaux temporels RTTI et/ou selon les paramètres de mesure de qualité de canal du créneau temporel BTTI, un paramètre MEAN_BEP global est calculé conformément à la formule suivante :

$$MEAN\_BEP_n = \frac{\sum\limits_{j} R_n^{(j)} \cdot MEAN\_BEP\_TN_n^{(j)}}{\sum\limits_{j} R_n^{(j)}},$$

où n est un indice d'itération, MEAN_BEP$_n$ est une n$^{ième}$ valeur acquise du paramètre MEAN_BEP global et j est un numéro de canal BTTI ou un numéro de canal RTTI ; lorsque j est le numéro de canal BTTI, R$_n^{(j)}$ est un paramètre de fiabilité de paramètres de qualité d'un type de modulation désigné du créneau temporel BTTI correspondant à j après filtrage, et MEAN_BEP_TN$_n^{(j)}$ est une n$^{ième}$valeur acquise du paramètre MEAN_BEP du créneau temporel BTTI correspondant à j ; tandis que lorsque j est le numéro de canal RTTI, R$_n^{(j)}$ est un paramètre de fiabilité de paramètres de qualité d'un type de modulation désigné de la paire de créneaux temporels RTTI correspondant à j après filtrage, et MEAN_BEP_PAIR$_n^{(j)}$ est une n$^{ième}$ valeur acquise du paramètre MEAN_BEP de la paire de créneaux temporels RTTI correspondant à j ; et une variance BEP globale est calculée conformément à la formule suivante :

$$CV\_BEP_n = \frac{\sum\limits_{j} R_n^{(j)} \cdot CV\_BEP\_TN_n^{(j)}}{\sum\limits_{j} R_n^{(j)}}$$

où n est un indice d'itération, CV_BEP$_n$ est une n$^{ième}$ valeur acquise de la variance BEP globale, et j est un numéro de canal BTTI ou un numéro de canal RTTI ; lorsque j est le numéro de canal BTTI, R$_n^{(j)}$ est un paramètre de fiabilité de paramètres de qualité d'un type de modulation désigné du créneau temporel BTTI correspondant à j après filtrage, et CV_BEP_TN$_n^{(j)}$est une n$^{ième}$ valeur acquise de la variance BEP du créneau temporel BTTI correspondant à j ; tandis que lorsque j est le numéro de canal RTTI, R$_n^{(j)}$ est un paramètre de fiabilité de paramètres de qualité d'un type de modulation désigné de la paire de créneaux temporels RTTI correspondant à j après filtrage, et CV_BEP_TN$_n^{(j)}$ est une n$^{ième}$ valeur acquise de la variance BEP de la paire de créneaux temporels RTTI correspondant à j.

**5.** Procédé selon l'une quelconque des revendications 1 à 4, dans lequel, avant la réception des salves formant le bloc radio RTTI, le procédé comprend en outre :

la réception d'une indication de mode de mesure d'un côté réseau, dans lequel l'indication du mode de mesure est configurée pour indiquer les paramètres de mesure de qualité de canal de la paire de créneaux temporels faisant l'objet d'un rapport conformément à une configuration RTTI ; et
l'exécution de la mesure conformément à la configuration RTTI selon l'indication du mode de mesure.

**6.** Procédé d'établissement d'un rapport de paramètres de mesure de qualité de canal, comprenant :

l'établissement d'un rapport de paramètres de mesure de qualité de canal à Intervalle de Temps d'Émission Réduit (RTTI) par l'intermédiaire d'un champ de rapport de valeur de mesure de créneau temporel unique correspondant à un créneau temporel quelconque d'une paire de créneaux temporels d'un bloc radio RTTI ; ou l'établissement d'un rapport de paramètres de mesure de qualité de canal RTTI par l'intermédiaire d'un champ de rapport de valeur de mesure de paire de créneaux temporels ajouté ;
dans lequel les paramètres de mesure de qualité de canal RTTI sont mesurés selon l'une quelconque des revendications 1 à 5.

**7.** Terminal pour système EGPRS, comprenant :

une unité de réception de salves (401), configurée pour recevoir des salves formant un bloc radio à Intervalle de Temps d'Émission Réduit (RTTI) ;
une première unité de calcul (402), configurée pour calculer des paramètres de mesure de qualité de canal du bloc radio RTTI selon des paramètres de mesure de qualité de canal des salves ; et
une deuxième unité de calcul (403), configurée pour calculer des paramètre de mesure de qualité de canal d'une paire de créneaux temporels correspondant au bloc radio RTTI conformément aux paramètres de mesure de qualité de canal du bloc radio RTTI ;
dans lequel la deuxième unité de calcul (403) comprend :

un module de réglage de paramètres, configuré pour régler un paramètre de fiabilité $R_n$ de paramètres de qualité d'un type de modulation désigné après filtrage conformément à la formule suivante :

$$R_n = (1-e) \cdot R_{n-1} + e \cdot \frac{(x_{n,a} + x_{n,b})}{2}, \; R_{-1} = 0,$$

où n est un indice d'itération, e est un facteur d'oubli destiné à un filtrage sur 20 ms identique à celui correspondant à une configuration d'un bloc radio à Intervalle de Temps d'Émission de Base (BTTI), $X_{n,a}$ est un paramètre indiquant s'il existe des paramètres de qualité d'un bloc constitué des premières 10 ms des $n^{èmes}$ 20 ms désignées pour être modulées, et $X_{n,b}$ est un paramètre indiquant s'il existe des paramètres de qualité d'un bloc constitué des dernières 10 ms des $n^{ièmes}$ 20 ms désignées pour être modulées ;
un module de calcul de Probabilité d'Erreur sur les Bits Moyenne (MEAN_BEP) de paire de créneaux temporels, configuré pour calculer un paramètre MEAN_BEP de la paire de créneaux temporels selon l'une quelconque des formules suivantes :

$$\text{MEAN\_BEP\_TN}_n = (1 - e \cdot \frac{x_{n,a} + x_{n,b}}{2R_n}) \cdot \text{MEAN\_BEP\_TN}_{n-1}$$

$$+ e \cdot \frac{x_{n,a} \text{MEAN\_BEP}_{bloc,n,a} + x_{n,a} \text{MEAN\_BEP}_{bloc,n,b}}{2R_n}$$

ou

$$\mathrm{MEAN\_BEP\_PAIR_n} = (1 - e \cdot \frac{x_{n,a} + x_{n,b}}{2R_n}) \cdot \mathrm{MEAN\_BEP\_PAIR_{n-1}} +$$

$$e \cdot \frac{x_{n,a}\mathrm{MEAN\_BEP_{bloc,n,a}} + x_{n,a}\mathrm{MEAN\_BEP_{bloc,n,b}}}{2R_n}$$

où n est un indice d'itération, $\mathrm{MEAN\_BEP\_TN_n}$ ou $\mathrm{MEAN\_BEP\_PAIR_n}$ est une n[ième] valeur acquise du paramètre MEAN_BEP de la paire de créneaux temporels, $\mathrm{MEAN\_BEP_{bloc,n,a}}$ est un paramètre MEAN_BEP du bloc radio RTTI des premières 10 ms des n[ièmes] 20 ms, et $\mathrm{MEAN\_BEP_{bloc,n,b}}$ est un paramètre MEAN_BEP du bloc radio RTTI des dernières 10 ms des n[ièmes] 20 ms ; et

un module de calcul de variance BEP de paire de créneaux temporels, configuré pour calculer une variance BEP de la paire de créneaux temporels selon l'une quelconque des formules suivantes :

$$\mathrm{CV\_BEP\_TN_n} = (1 - e \cdot \frac{x_{n,a} + x_{n,b}}{2R_n}) \cdot \mathrm{CV\_BEP\_TN_{n-1}} +$$

$$e \cdot \frac{x_{n,a}\mathrm{CV\_BEP_{bloc,n,a}} + x_{n,b}\mathrm{CV\_BEP_{bloc,n,b}}}{2R_n}$$

ou

$$\mathrm{CV\_BEP\_PAIR_n} = (1 - e \cdot \frac{x_{n,a} + x_{n,b}}{2R_n}) \cdot \mathrm{CV\_BEP\_PAIR_{n-1}} +$$

$$e \cdot \frac{x_{n,a}\mathrm{CV\_BEP_{bloc,n,a}} + x_{n,b}\mathrm{CV\_BEP_{bloc,n,b}}}{2R_n}$$

où n est un indice d'itération, $\mathrm{CV\_BEP\_TN_n}$ ou $\mathrm{CV\_BEP\_PAIR_n}$ est une n[ième] valeur acquise de la variance BEP de la paire de créneaux temporels, $\mathrm{CV\_BEP_{bloc,n,a}}$ est une variance BEP du bloc radio RTTI des premières 10 ms des n[ièmes] 20 ms, et $\mathrm{CV\_BEP_{bloc,n,b}}$ est une variance BEP du bloc radio RTTI des dernières 10 ms des n[ièmes] 20 ms.

**8.** Terminal selon la revendication 7, comprenant en outre :

une troisième unité de calcul (404), configurée pour calculer des paramètres globaux de mesure de qualité de canal selon les paramètres de mesure de qualité de canal de la paire de créneaux temporels RTTI et/ou selon les paramètres de mesure de qualité de canal d'un créneau temporel à Intervalle de Temps d'Émission de Base (BTTI).

**9.** Terminal selon la revendication 8, dans lequel la troisième unité de calcul comprend :

un module de calcul de paramètre MEAN_BEP global, configuré pour calculer un paramètre MEAN_BEP global selon la formule suivante :

$$\mathrm{MEAN\_BEP_n} = \frac{\sum_j R_n^{(j)} \cdot \mathrm{MEAN\_BEP\_TN_n^{(j)}} + \sum_i R_n^{(i)} \cdot \mathrm{MEAN\_BEP\_PAIR_n^{(i)}}}{\sum_j R_n^{(j)} + \sum_i R_n^{(i)}}$$

où n est un indice d'itération pendant l'établissement du rapport, j est un numéro de canal BTTI, i est un numéro de canal RTTI, MEAN_BEP$_n$ est une n$^{ième}$ valeur acquise du paramètre MEAN_BEP global, R$_n^{(j)}$ est un paramètre de fiabilité de paramètres de qualité d'un type de modulation désigné du créneau temporel BTTI correspondant à j après filtrage, R$_n^{(i)}$ est un paramètre de fiabilité de paramètres de qualité d'un type de modulation désigné de la paire de créneaux temporels RTTI correspondant à i après filtrage, MEAN_BEP_TN$_n^{(j)}$ est une n$^{ième}$ valeur acquise du paramètre MEAN_BEP du créneau temporel BTTI correspondant à j, et MEAN_BEP_PAIR$_n^{(i)}$ est une n$^{ième}$ valeur acquise du paramètre MEAN_BEP de la paire de créneaux temporels RTTI correspondant à i ; et

un module de calcul de variance BEP globale, configurée pour calculer une variance BEP globale selon la formule suivante :

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}}$$

où n est un indice d'itération pendant l'établissement du rapport, j est un numéro de canal BTTI, i est un numéro de canal RTTI, CV_BEP$_n$ est une n$^{ième}$ valeur acquise de la variance BEP globale, R$_n^{(j)}$ est un paramètre de fiabilité de paramètres de qualité d'un type de modulation désigné du créneau temporel BTTI correspondant à j après filtrage, R$_n^{(i)}$ est un paramètre de fiabilité de paramètres de qualité d'un type de modulation désigné de la paire de créneaux temporels RTTI correspondant à i après filtrage, CV_BEP_TN$_n^{(j)}$ est une n$^{ième}$ valeur acquise de la variance BEP du créneau temporel BTTI correspondant à j, et CV_BEP_PAIR$_n^{(i)}$ est une n$^{ième}$ valeur acquise de la variance BEP de la paire de créneaux temporels RTTI correspondant à i.

**10.** Terminal selon la revendication 8, dans lequel la troisième unité de calcul comprend :

un module de calcul de paramètre MEAN_BEP global, configuré pour calculer un paramètre MEAN_BEP global selon la formule suivante :

$$MEAN\_BEP_n = \frac{\sum_j R_n^{(j)} \cdot MEAN\_BEP\_TN_n^{(j)}}{\sum_j R_n^{(j)}},$$

où n est un indice d'itération, MEAN_BEP$_n$ est une n$^{ième}$ valeur acquise du paramètre MEAN_BEP global et j est un numéro de canal BTTI ou un numéro de canal RTTI ; lorsque j est le numéro de canal BTTI, R$_n^{(j)}$ est un paramètre de fiabilité de paramètres de qualité d'un type de modulation désigné du créneau temporel BTTI correspondant à j après filtrage, et MEAN_BEP_TN$_n^{(j)}$ est une n$^{ième}$ valeur acquise du paramètre MEAN_BEP du créneau temporel BTTI correspondant à j ; tandis que lorsque j est le numéro de canal RTTI, R$_n^{(j)}$ est un paramètre de fiabilité de paramètres de qualité d'un type de modulation désigné de la paire de créneaux temporels RTTI correspondant à j après filtrage, et MEAN_BEP_TN$_n^{(j)}$ est une n$^{ième}$ valeur acquise du paramètre MEAN_BEP de la paire de créneaux temporels RTTI correspondant à j ; et
un module de calcul de variance BEP globale configuré pour calculer une variance BEP globale conformément à la formule suivante :

$$CV\_BEP_n = \frac{\sum_j R_n^{(j)} \cdot CV\_BEP\_TN_n^{(j)}}{\sum_j R_n^{(j)}},$$

où n est un indice d'itération, CV_BEP$_n$ est une n$^{ième}$ valeur acquise de la variance BEP globale, et j est un numéro de canal BTTI ou un numéro de canal RTTI ; lorsque j est le numéro de canal BTTI, R$_n^{(j)}$ est un paramètre de fiabilité de paramètres de qualité d'un type de modulation désigné du créneau temporel BTTI correspondant à j après filtrage, et CV_BEP_TN$_n^{(j)}$ est une n$^{ième}$ valeur acquise de la variance BEP du créneau temporel BTTI correspondant à j ; tandis que lorsque j est le numéro de canal RTTI, R$_n^{(j)}$ est un paramètre de fiabilité de paramètres de qualité d'un type de modulation désigné de la paire de créneaux temporels RTTI correspondant à j après filtrage, et $CV\_BEP\_TN_n^{(j)}$ est une $n^{ième}$ valeur acquise de la variance BEP de la paire de créneaux temporels RTTI correspondant à j.

11. Système de mesure de qualité de canal, comprenant :

un côté réseau, configuré pour délivrer une indication de mode de mesure, l'indication de mode de mesure étant configurée pour indiquer des paramètres de mesure de qualité de canal d'une paire de créneaux temporels dont un rapport est établi conformément à une configuration d'Intervalle de Temps d'Émission Réduit (RTTI) ; et un terminal, selon l'une quelconque des revendications 7 à 10, et configuré pour effectuer une mesure conformément à la configuration RTTI selon l'indication du mode de mesure.

Frame Time slot
number number

i

i+1

i+n

i+n+1

| | 0 | 1 | 2 | 3 | 4 | 5 | 6 | 7 |
| PDCH | 0 | 1 | 2 | 3 | 4 | 5 | 6 | 7 |

PDCH PDCH PDCH PDCH PDCH

**FIG. 1**

FIG. 2

Bursts forming an RTTI radio block are received. /301

Channel quality measurement parameters of the RTTI radio block are computed according to channel quality measurement parameters of the bursts. /302

Channel quality measurement parameters of a time slot pair corresponding to the RTTI radio block are computed according to the channel quality measurement parameters of the RTTI radio block. /303

## FIG. 3

Burst receiving unit /401

First computing unit /402

Second computing unit /403

Third computing unit /404

## FIG. 4

**EP 2 237 595 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9561879 A2